(19) Europäisches Patentamt / European Patent Office / Office européen des brevets

(11) **EP 4 738 721 A1**

(12) **EUROPEAN PATENT APPLICATION**
published in accordance with Art. 153(4) EPC

(43) Date of publication:
06.05.2026 Bulletin 2026/19

(21) Application number: 24836223.8

(22) Date of filing: 14.06.2024

(51) International Patent Classification (IPC):
$H04B\ 7/06^{(2006.01)}$    $H04W\ 52/36^{(2009.01)}$
$H04B\ 17/318^{(2015.01)}$    $H04B\ 1/3827^{(2015.01)}$
$H04L\ 27/18^{(2006.01)}$    $H04W\ 52/28^{(2009.01)}$

(52) Cooperative Patent Classification (CPC):
H04B 1/3827; H04B 7/06; H04B 17/318;
H04L 27/18; H04W 52/28; H04W 52/36

(86) International application number:
PCT/KR2024/008239

(87) International publication number:
WO 2025/009774 (09.01.2025 Gazette 2025/02)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 03.07.2023 KR 20230085587
25.07.2023 KR 20230096901
12.06.2024 KR 20240076360

(71) Applicant: Samsung Electronics Co., Ltd.
Suwon-si, Gyeonggi-do 16677 (KR)

(72) Inventors:
• CHA, Jaemoon
  Suwon-si Gyeonggi-do 16677 (KR)
• KIM, Dohun
  Suwon-si Gyeonggi-do 16677 (KR)
• JANG, Kyujae
  Suwon-si Gyeonggi-do 16677 (KR)
• LEE, Seongju
  Suwon-si Gyeonggi-do 16677 (KR)
• JUNG, Euichang
  Suwon-si Gyeonggi-do 16677 (KR)

(74) Representative: Gulde & Partner
Patent- und Rechtsanwaltskanzlei mbB
Berliner Freiheit 2
10785 Berlin (DE)

(54) **ELECTRONIC DEVICE FOR CHANGING TRANSMITTING ANTENNA AND OPERATION METHOD THEREOF**

(57) According to one embodiment, an electronic device may comprise a plurality of antennas including a first antenna and a second antenna. The electronic device may comprise at least one processor. The electronic device may comprise memory for storing instructions. The instructions, when executed by the at least one processor, may cause the electronic device, while the electronic device performs communication using the first antenna, on the basis that the first antenna is set as a transmission antenna, to identify that a first condition for changing the transmission antenna is satisfied, the first condition being based being based on reception strength difference between a first reception strength associated with the first antenna and a second reception strength associated with the second antenna and/or a maximum transmission power value difference between a maximum value of first transmission power associated with the first antenna and a maximum value of second transmission power associated with the second antenna. The instructions, when executed by the at least one processor, may cause the electronic device, on the basis of the first condition being satisfied, to identify whether a second condition is satisfied, the second condition being that a period during which back-off is not implemented for the maximum transmission power associated with the second antenna exceeds a threshold period. The instructions, when executed by the at least one processor, may cause the electronic device, on the basis of the second condition being satisfied, to change the transmission antenna from the first antenna to the second antenna. Other various embodiments are possible.

FIG. 13

**Description**

[Technical Field]

Various embodiments of the disclosure relate to an electronic device changing a transmission antenna and a method for operating the same.

[Background Art]

A user equipment (UE) may transmit electromagnetic waves to transmit/receive data to/from a base station. Electromagnetic waves radiated from the UE may harm the human body, and various domestic or foreign organizations attempt to restrict the harmful electromagnetic waves. For example, the specific absorption rate (SAR) is a value indicating how much electromagnetic radiation from a mobile communication terminal is absorbed by the human body. SAR uses the unit of KW/g (or mW/g), which may mean the amount of power (KW, W or mW) absorbed per 1g of the human body. As the issue of harmfulness of electromagnetic waves attracts attention, SAR limit standards for mobile communication terminals have been established.

[Detailed Description of the Invention]

[Technical Solution]

According to an embodiment, an electronic device may include a plurality of antennas including a first antenna and a second antenna. The electronic device may comprise at least one processor. The electronic device may comprise memory storing instructions. The instructions may, when executed by the at least one processor, cause the electronic device, based on the first antenna being set as a transmission antenna, while the electronic device performs communication using the first antenna of the electronic device, to identify that a first condition for changing the transmission antenna is satisfied, based on a reception strength difference between a first reception strength associated with the first antenna and a second reception strength associated with the second antenna, and/or a transmission power maximum value difference between a maximum value of a first transmission power associated with the first antenna and a maximum value of a second transmission power associated with the second antenna. The instructions may, when executed by the at least one processor, cause the electronic device, based on satisfaction of the first condition, to identify whether a second condition is satisfied, the second condition being that a period during which back-off is not performed on the maximum value of the transmission power associated with the second antenna exceeds a threshold period. The instructions may, when executed by the at least one processor, cause the electronic device, based on the second condition being satisfied, to change the transmission antenna from the first antenna to the second antenna.

According to an embodiment, there may be provided a computer-readable storage medium storing at least one instruction. The instructions may, when executed by the at least one processor, cause the electronic device, based on the first antenna being set as a transmission antenna, while the electronic device performs communication using the first antenna of the electronic device, to identify that a first condition for changing the transmission antenna is satisfied, based on a reception strength difference between a first reception strength associated with the first antenna and a second reception strength associated with the second antenna, and/or a transmission power maximum value difference between a maximum value of a first transmission power associated with the first antenna and a maximum value of a second transmission power associated with the second antenna. The instructions may, when executed by the at least one processor, cause the electronic device, based on satisfaction of the first condition, to identify whether a second condition is satisfied, the second condition being that a period during which back-off is not performed on the maximum value of the transmission power associated with the second antenna exceeds a threshold period. The instructions may, when executed by the at least one processor, cause the electronic device, based on the second condition being satisfied, to change the transmission antenna from the first antenna to the second antenna.

According to an embodiment, an operation method of an electronic device including a first antenna and a second antenna may include, based on the first antenna being set as a transmission antenna, while the electronic device performs communication using the first antenna of the electronic device, identifying that a first condition for changing the transmission antenna is satisfied, based on a reception strength difference between a first reception strength associated with the first antenna and a second reception strength associated with the second antenna, and/or a transmission power maximum value difference between a maximum value of a first transmission power associated with the first antenna and a maximum value of a second transmission power associated with the second antenna. The operation method may include, based on satisfaction of the first condition, identifying whether a second condition is satisfied, the second condition being that a period during which back-off is not performed on the maximum value of the transmission power associated with the second antenna exceeds a threshold period. The operation method may include, based on the second condition being satisfied, changing the transmission antenna from the first antenna to the second antenna.

[Brief Description of Drawings]

FIG. 1 is a view illustrating an electronic device in a network environment according to an embodiment;

FIG. 2A is a block diagram illustrating an electronic device for supporting legacy network communication and 5G network communication according to various embodiments;

FIG. 2B is a block diagram illustrating an electronic device for supporting legacy network communication and 5G network communication according to various embodiments;

FIG. 3A is a flowchart illustrating an operation method of an electronic device according to various embodiments;

FIG. 3B is a view illustrating transmission power and SAR over time according to various embodiments;

FIGS. 4A, 4B, and 4C illustrate graphs of transmission power per time according to various embodiments;

FIGS. 4D and 4E illustrate tables of transmission power per time according to various embodiments.

FIG. 5A is a block diagram illustrating an example electronic device according to various embodiments;

FIG. 5B is a view illustrating an example electronic device according to various embodiments;

FIG. 6A is a flowchart illustrating an operation method of an electronic device according to an embodiment.

FIG. 6B is a view illustrating the RF exposure corresponding to two antennas according to an embodiment.

FIG. 6C is a view illustrating a change of transmission antennas according to a comparative example.

FIG. 6D is a view illustrating a change of transmission antennas according to an embodiment.

FIG. 7 is a flowchart illustrating a method for operating an electronic device according to an embodiment;

FIG. 8A is a flowchart illustrating an operation method of an electronic device according to an embodiment;

FIG. 8B is a flowchart illustrating an operation method of an electronic device according to an embodiment.

FIG. 9A is a flowchart illustrating an operation method of an electronic device according to an embodiment.

FIG. 9B is a view illustrating conditions for changing a transmission antenna according to an embodiment.

FIGS. 10A and 10B are flowcharts illustrating a method for operating an electronic device according to an embodiment.

FIG. 11 is a view illustrating a maximum value of transmission power when different transmission antenna change conditions are used for two antennas according to an embodiment.

FIG. 12A is a flowchart illustrating an operation method of an electronic device according to an embodiment.

FIG. 12B is a flowchart illustrating an operation method of an electronic device according to an embodiment.

FIG. 13 is a view illustrating an operation method of an electronic device according to an embodiment.

FIG. 14 is a view illustrating an operation method of an electronic device according to an embodiment.

FIG. 15 is a view illustrating an operation method of an electronic device according to an embodiment.

FIG. 16 is a view illustrating an operation method of an electronic device according to an embodiment.

FIG. 17 is a view illustrating an operation method of an electronic device according to an embodiment.

FIG. 18 is a view illustrating an operation method of an electronic device according to an embodiment.

[Mode for Carrying out the Invention]

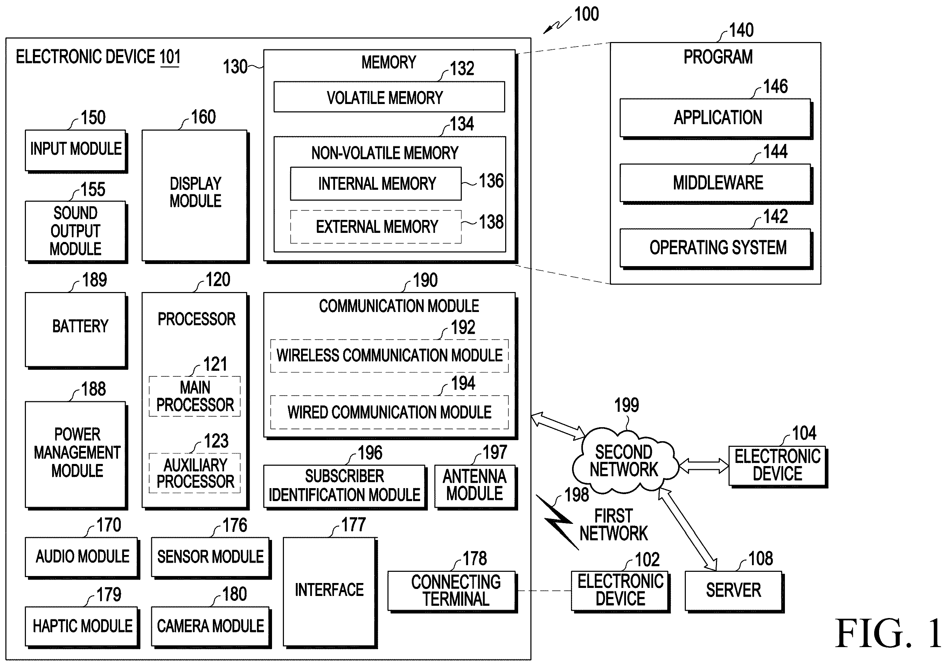

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., the program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operation state (e.g., power or temperature) of the electronic device 101 or an external environmental state (e.g., the user's state), and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wiredly) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth™, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

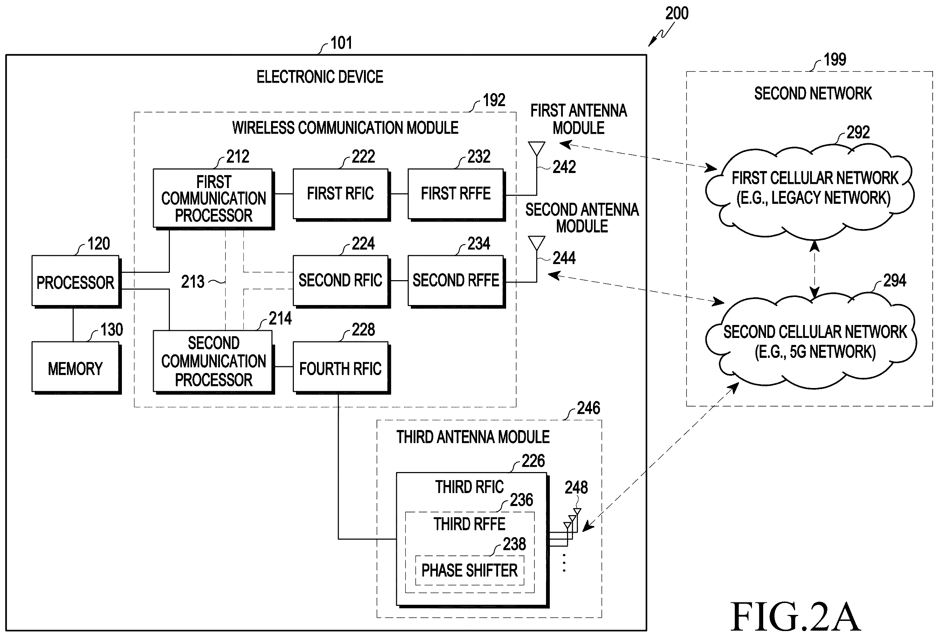

FIG. 2A is a block diagram 200 illustrating an electronic device 101 for supporting legacy network communication and 5G network communication according to various embodiments. Referring to FIG. 2A, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, a third antenna module 246, and antennas 248. The electronic device 101 may further include a processor 120 and memory 130. The second network 199 may include a first cellular network 292 and a second cellular network 294. According to an embodiment, the electronic device 101 may further include at least one component among the components of FIG. 1, and the second network 199 may further include at least one other network. According to an embodiment, the first communication processor 212, the second communication processor 214, the first RFIC 222, the second RFIC 224, the fourth RFIC 228, the first RFFE 232, and the second RFFE 234 may form at least part of the wireless communication module 192. According to another embodiment, the fourth RFIC 228 may be omitted or be included as part of the third RFIC 226.

The first communication processor 212 may establish a communication channel of a band that is to be used for wireless communication with the first cellular network 292 or may support legacy network communication via the established communication channel. According to various embodiments, the first cellular network may be a legacy network that includes second generation (2G), third generation (3G), fourth generation (4G), or long-term evolution (LTE) networks. The second CP 214 may establish a communication channel corresponding to a designated band (e.g., from about 6GHz to about 60GHz) among bands that are to be used for wireless communication with the second cellular network 294 or may support fifth generation (5G) network communication via the established communication channel. According to an embodiment, the second cellular network 294 may be a 5G network defined by the 3rd generation partnership project (3GPP). Additionally, according to an embodiment, the first CP 212 or the second CP 214 may establish a communication channel corresponding to another designated band (e.g., about 6GHz or less) among the bands that are to be used for wireless communication with the second cellular network 294 or may support fifth generation (5G) network communication via the established communication channel.

The first communication processor 212 may perform data transmission/reception with the second communication processor 214. For example, data classified as transmitted via the second cellular network 294 may be changed to be transmitted via the first cellular network 292. In this case, the first communication processor 212 may receive transmission data from the second communication processor 214. For example, the first communication processor 212 may transmit/receive data to/from the second communication processor 214 via an inter-processor interface 213. The inter-processor interface 213 may be implemented as, e.g., universal asynchronous receiver/transmitter (UART) (e.g., high speed-UART (HS-UART)) or peripheral component interconnect bus express (PCIe) interface, but is not limited to a specific kind. The first communication processor 212 and the second communication processor 214 may exchange packet data information and control information using, e.g., a shared memory. The first communication processor 212 may transmit/receive various types of information, such as sensing information, information about output strength, and resource block (RB) allocation information, to/from the second communication processor 214.

According to implementation, the first communication processor 212 may not be directly connected with the second communication processor 214. In this case, the first communication processor 212 may transmit/receive data to/from the second communication processor 214 via a processor 120 (e.g., an application processor). For example, the first communication processor 212 and the second communication processor 214 may transmit/receive data to/from the processor 120 (e.g., an application processor) via an HS-UART interface or PCIe interface, but the kind of the interface is not limited thereto. The first communication processor 212 and the second communication processor 214 may exchange control information and packet data information with the processor 120 (e.g., an application processor) using a shared memory.

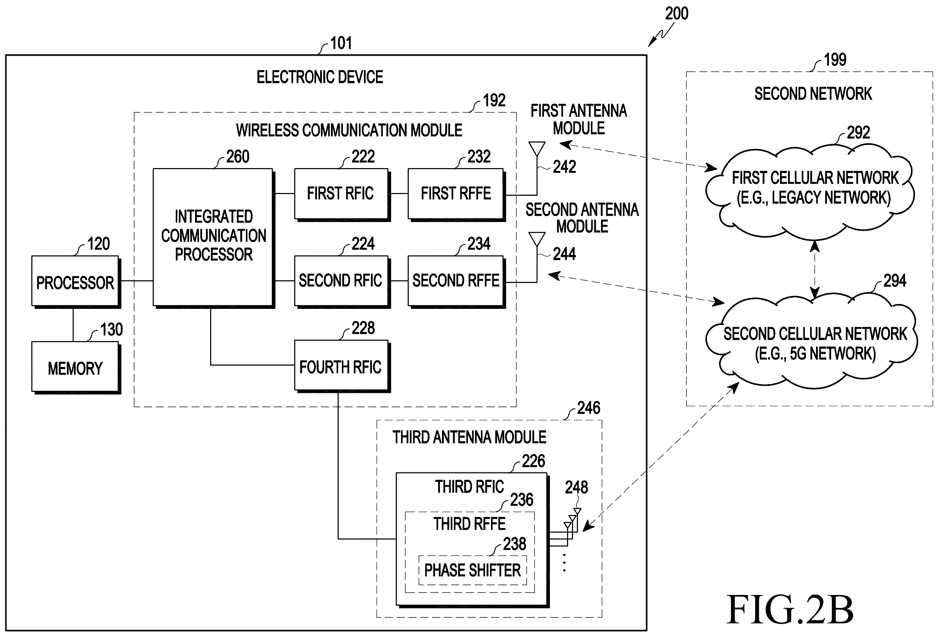

According to an embodiment, the first CP 212 and the second CP 214 may be implemented in a single chip or a single package. According to an embodiment, the first communication processor 212 or the second communication processor 214, along with the processor 120, an assistance processor 123, or communication module 190, may be formed in a single chip or single package. For example, as shown in FIG. 2B, an integrated communication processor 260 may support all of the functions for communication with the first cellular network 292 and the second cellular network 294.

As described above, at least one of the processor 120, the first communication processor 212, the second communication processor 214, or the integrated communication processor 260 may be implemented as a single chip or a single package. In this case, the single chip or single package may include memory (or storage means) storing instructions that cause at least some of operations performed according to various embodiments and a processing circuit (or operation circuit, but the term is not limited) for executing instructions.

Upon transmission, the first RFIC 222 may convert a baseband signal generated by the first communication processor 212 into a radio frequency (RF) signal with a frequency ranging from about 700MHz to about 3GHz which is used by the first cellular network 292 (e.g., a legacy network). Upon receipt, the RF signal may be obtained from the first network 292 (e.g., a legacy network) through an antenna (e.g., the first antenna module 242) and be pre-processed via an RFFE (e.g., the first RFFE 232). The first RFIC 222 may convert the pre-processed RF signal into a baseband signal that may be processed by the first communication processor 212.

Upon transmission, the second RFIC 224 may convert the baseband signal generated by the first communication processor 212 or the second communication processor 214 into a Sub6-band (e.g., about 6GHz or less) RF signal (hereinafter, "5G Sub6 RF signal") that is used by the second cellular network 294 (e.g., a 5G network). Upon receipt, the 5G Sub6 RF signal may be obtained from the second cellular network 294 (e.g., a 5G network) through an antenna (e.g., the second antenna module 244) and be pre-processed via an RFFE (e.g., the second RFFE 234). The second RFIC 224 may convert the pre-processed 5G Sub6 RF signal into a baseband signal that may be processed by a corresponding processor of the first communication processor 212 and the second communication processor 214.

The third RFIC 226 may convert the baseband signal generated by the second communication processor 214 into a 5G Above6 band (e.g., from about 6GHz to about 60GHz) RF signal (hereinafter, "5G Above6 RF signal") that is to be used by the second cellular network 294 (e.g., a 5G network). Upon receipt, the 5G Above6 RF signal may be obtained from the second cellular network 294 (e.g., a 5G network) through an antenna (e.g., the antenna 248) and be pre-processed via the third RFFE 236. The third RFIC 226 may convert the pre-processed 5G Above6 RF signal into a baseband signal that may be processed by the second communication processor 214. According to an embodiment, the third RFFE 236 may be formed as part of the third RFIC 226.

According to an embodiment, the electronic device 101 may include the fourth RFIC 228 separately from, or as at least part of, the third RFIC 226. In this case, the fourth RFIC 228 may convert the baseband signal generated by the second communication processor 214 into an intermediate frequency band (e.g., from about 9GHz to about 11GHz) RF signal (hereinafter, "IF signal") and transfer the IF signal to the third RFIC 226. The third RFIC 226 may convert the IF signal into a 5G Above6 RF signal. Upon receipt, the 5G Above6 RF signal may be received from the second cellular network 294 (e.g., a 5G network) through an antenna (e.g., the antenna 248) and be converted into an IF signal by the third RFIC 226. The fourth RFIC 228 may convert the IF signal into a baseband signal that may be processed by the second communication processor 214.

According to an embodiment, the first RFIC 222 and the second RFIC 224 may be implemented as at least part of a single chip or single package. According to various embodiments, when the first RFIC 222 and the second RFIC 224 in FIG. 2A or 2B are implemented as a single chip or a single package, they may be implemented as an integrated RFIC. In this case, the integrated RFIC is connected to the first RFFE 232 and the second RFFE 234 to convert a baseband signal into a signal of a band supported by the first RFFE 232 and/or the second RFFE 234, and may transmit the converted signal to one of the first RFFE 232 and the second RFFE 234. According to an embodiment, the first RFFE 232 and the second RFFE 234 may be implemented as at least part of a single chip or single package. According to an embodiment, at least one of the first antenna module 242 or the second antenna module 244 may be omitted or be combined with another antenna module to process multi-band RF signals.

According to an embodiment, the third RFIC 226 and the antenna 248 may be disposed on the same substrate to form the third antenna module 246. For example, the wireless communication module 192 or the processor 120 may be disposed on a first substrate (e.g., a main printed circuit board (PCB)). In this case, the third RFIC 226 and the antenna 248, respectively, may be disposed on one area (e.g., the bottom) and another (e.g., the top) of a second substrate (e.g., a sub PCB) which is provided separately from the first substrate, forming the third antenna module 246. Placing the third RFIC 226 and the antenna 248 on the same substrate may shorten the length of the transmission line therebetween. This may reduce a loss (e.g., attenuation) of high-frequency band (e.g., from about 6GHz to about 60GHz) signal used for 5G network communication due to the transmission line. Thus, the electronic device 101 may enhance the communication quality with the second network 294 (e.g., a 5G network).

According to an embodiment, the antenna 248 may be formed as an antenna array which includes a plurality of antenna elements available for beamforming. In this case, the third RFIC 226 may include a plurality of phase shifters 238 corresponding to the plurality of antenna elements, as part of the third RFFE 236. Upon transmission, the plurality of phase shifters 238 may change the phase of the 5G Above6 RF signal which is to be transmitted to the outside (e.g., a 5G network base station) of the electronic device 101 via their respective corresponding antenna elements. Upon receipt, the plurality of phase shifters 238 may change the phase of the 5G Above6 RF signal received from the outside to the same or substantially the same phase via their respective corresponding antenna elements. This enables transmission or reception via beamforming between the electronic device 101 and the outside.

The second cellular network 294 (e.g., a 5G network) may be operated independently (e.g., as standalone (SA)) from, or in connection (e.g., as non-standalone (NSA)) with the first cellular network 292 (e.g., a legacy network). For example, the 5G network may have the access network (e.g., 5G radio access network (RAN) or next generation RAN (NG RAN)) but may not have the core network (e.g., next generation core (NGC)). In this case, the electronic device 101, after accessing a 5G network access network, may access an external network (e.g., the Internet) under the control of the core network (e.g., the evolved packet core (EPC)) of the legacy network. Protocol information (e.g., LTE protocol information) for communication with the legacy network or protocol information (e.g., New Radio (NR) protocol information) for communication with the 5G network may be stored in the memory 230 and be accessed by other components (e.g., the processor 120, the first communication processor 212, or the second communication processor 214).

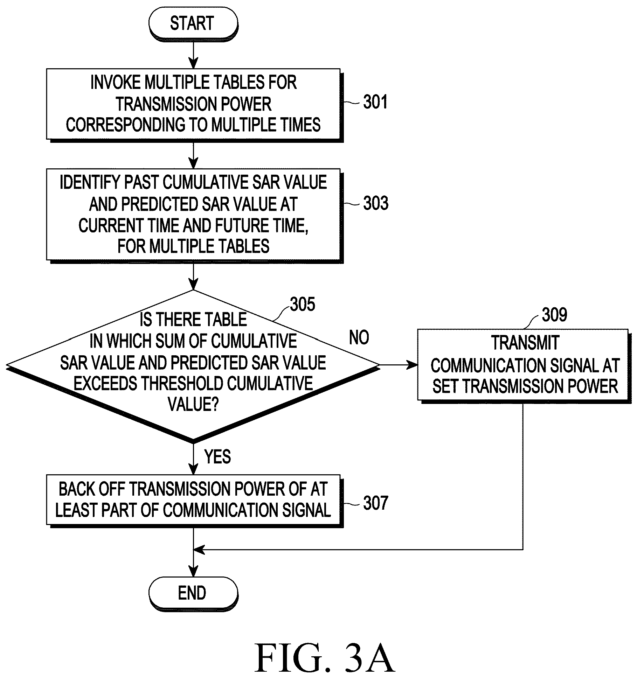

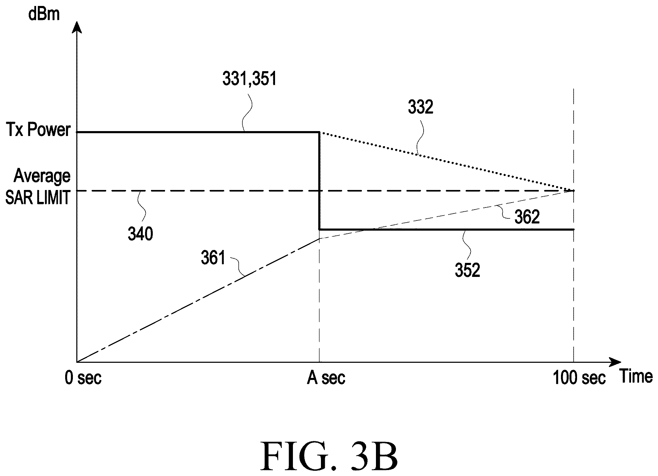

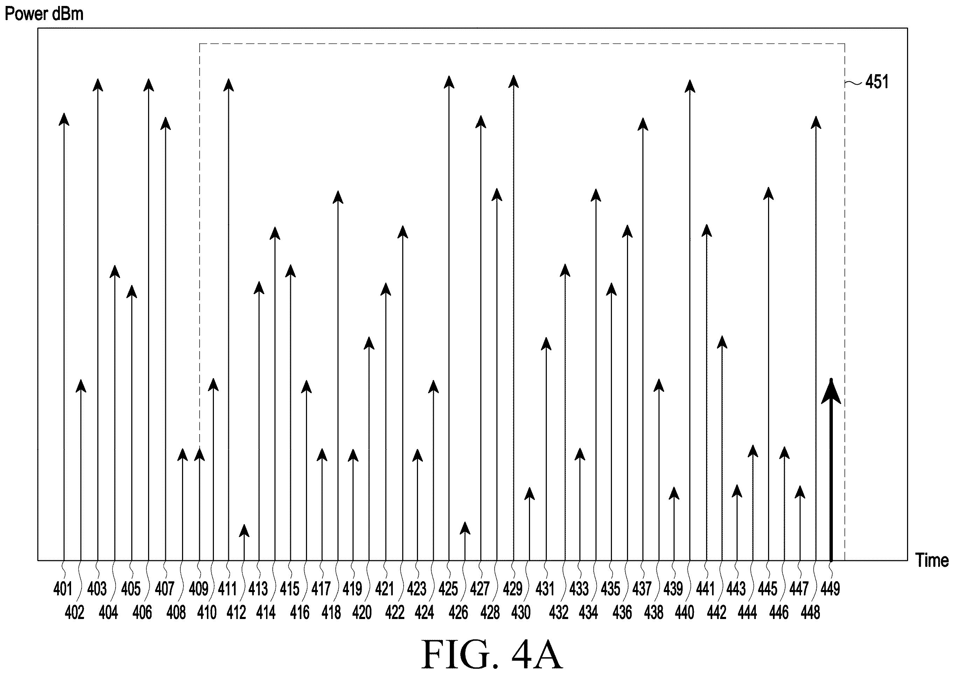

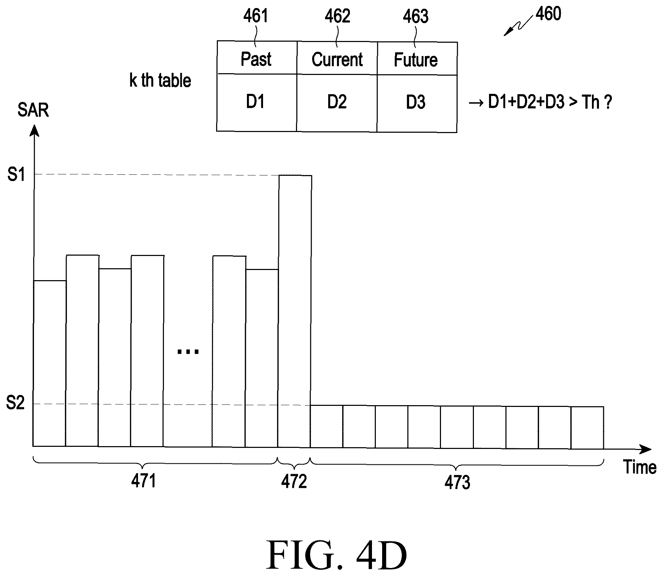

FIG. 3A is a flowchart illustrating an operation method of an electronic device according to various embodiments. The embodiment of FIG. 3A is described with reference to FIGS. 3B and 4A to 4E. FIG. 3B is a view illustrating transmission power and SAR over time according to various embodiments. FIGS. 4A to 4C illustrate graphs of transmission power per time according to various embodiments. FIGS. 4D to 4E illustrate tables of transmission power per time according to various embodiments.

According to an embodiment, the electronic device may back off the transmission power based on the SAR included in FIG. 3B. For example, the UE may back off the transmission power, the maximum transmission power level (MTPL), e.g., if the SAR expected by the transmission power is expected to exceed a threshold. For example, upon identifying that a specific event (e.g., a grip, hot-spot, or proximity) occurs, the UE may transmit an RF signal in the back-off power corresponding to the event or transmit an RF signal in the transmission power set based on the maximum transmission power level.

According to an embodiment, there is also used technology of backing off the transmission power (or maximum transmission power level) based on the total SAR value accumulated for a predetermined time (or the average of the SARs generated for a predetermined time). The SAR that instantaneously affects the human body and/or the SAR that affects the human body on average should also be considered. Therefore, the transmission power (or maximum transmission power level) when the total SAR value accumulated (or the average of the SARs generated for a predetermined time) meets a designated condition may be backed off.

The total amount of SARs accumulated for each of the plurality of antennas may be managed, so that the maximum transmission power level may be set for each of the plurality of antennas. The UE may determine whether to change the transmission antenna based on the reception strength and/or maximum transmission power level corresponding to each of the plurality of antennas. For example, when the reception strength and/or maximum transmission power level corresponding to a first antenna determined as a transmission antenna and the reception strength and/or maximum transmission power level corresponding to a second antenna meet the transmission antenna change condition, the UE may change the transmission antenna from the first antenna to the second antenna.

According to various embodiments, an electronic device 101 (e.g., at least one of the processor 120, the first communication processor 212, the second communication processor 214, or the integrated communication processor 260) may invoke (or read) a plurality of tables for the transmission power corresponding to a plurality of times in operation 301. Before describing the embodiment associated with FIG. 3A, terms as shown in Table 1 are defined.

[Table 1]

| | | |
|---|---|---|
| a. | Normal MAX Power: the maximum transmission power when SAR margin remains | |
| b. | Normal Max SAR: the value of SAR generated in normal MAX power | |
| c. | Back-off MAX Power: the maximum transmission power when back-off is performed due to shortage of SAR margin | |
| d. | Back-off Max SAR: the value of SAR generated when operating in back-off max power | |
| e. | Measurement Time(T): period for calculating the accumulated SAR or SAR average | |
| f. | Measurement Period(P): period (or time interval) for calculating SAR | |
| g. | Number of tables for calculating SAR: T/P - 1 | |
| h. | Average SAR LIMIT: the maximum value of the average SAR that should not be exceeded during T | |
| i. | Average Time(A_Time): the time measured with SARs accumulated | |
| j. | Accumulated SAR : the sum of SARs accumulated for average time. | |
| k. | Max accumulated SAR : Average SAR LIMIT X measurement Time | |
| l. | Average SAR : the value of average SAR used for average Time | |
| m. | Tx Room : Max accumulated SAR - accumulated SAR, SAR remaining after use | |
| n. | Remain Time(R_Time) : total measurement time - time (A_Time) during which SAR is measured up to now | |

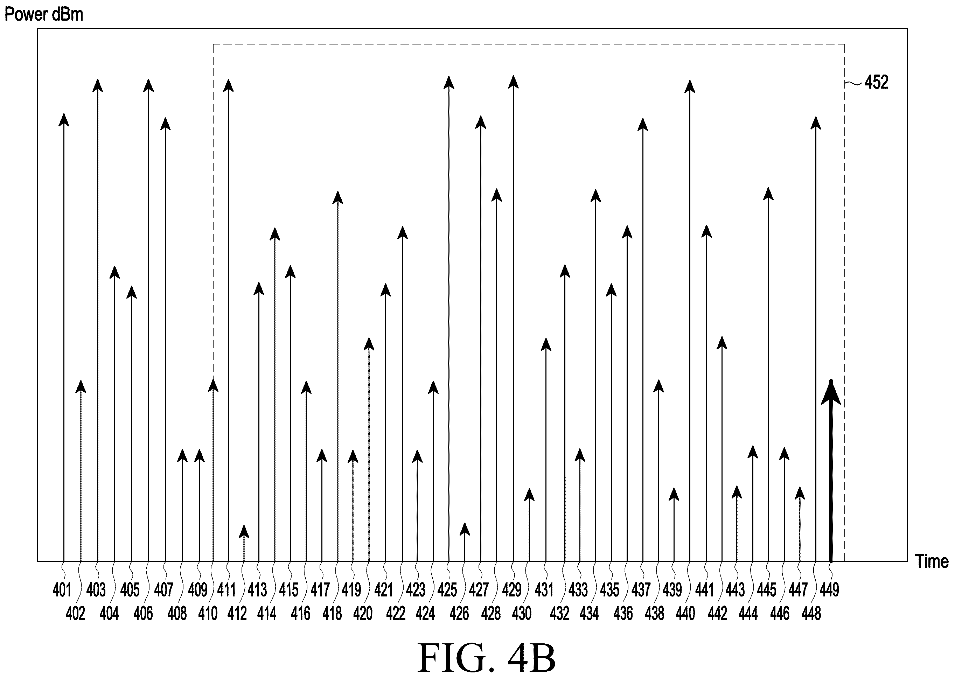

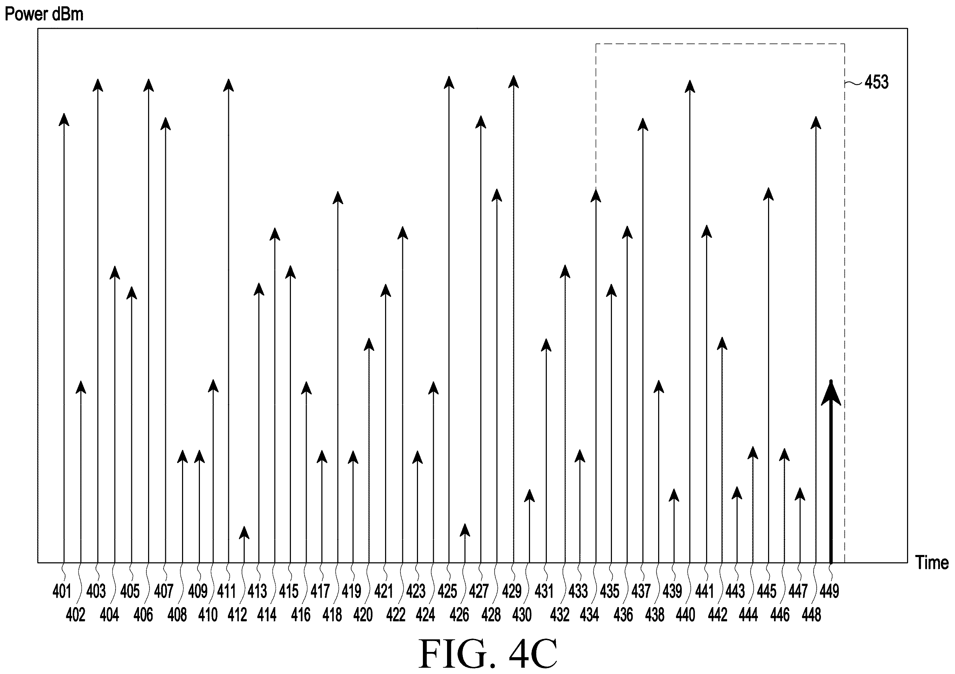

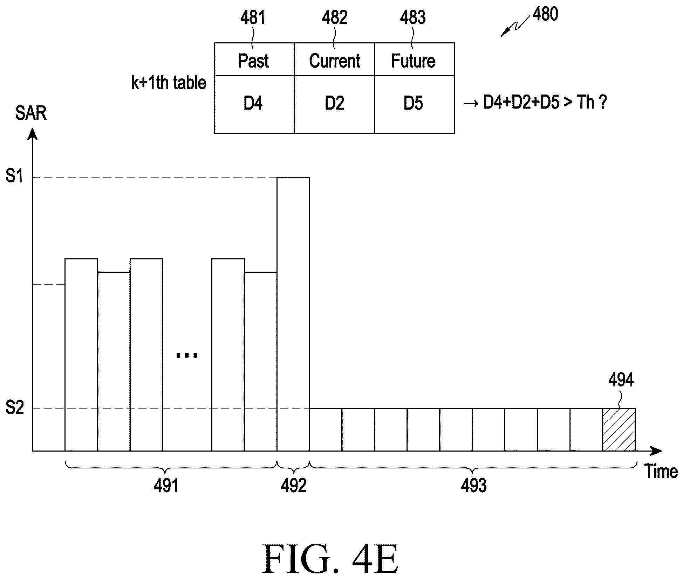

First, the table is described with reference to FIGS. 4A to 4C. Referring to FIG. 4A, a graph including transmission power for a plurality of times 401 to 449 is illustrated. The accumulated SAR (the accumulated SAR of Table 1) for a measurement time (the measurement time of Table 1), e.g., an measurement time including 50 time points, may be required to maintain a value below the maximum accumulated SAR (the max accumulated SAR of Table 1). The electronic device 101 may determine the transmission power of an RF signal to be transmitted at the current time point 449 to allow the accumulated SAR of nine future time points (e.g., the remain time of Table 1) in addition to the accumulated SAR at the current time point 449 and any past time points 409 to 448 (e.g., the average time of Table 1) to maintain below the maximum accumulated SAR. Further, as shown in FIG. 4B, the electronic device 101 may identify the transmission powers 452 which are one time point shifted from the transmission powers 451 at the current time point 449 and any past time points 409 to 448. Shifting by one time point may mean not reflecting data at the oldest time point (e.g., time point 409 in FIG. 4A). The number of transmission powers 452 at the current time point 449 and any past time points 410 to 448 is 40 and may be one smaller than the number, 41, of the transmission powers 451 of FIG. 4A. The electronic device 101 may determine the transmission power at the current time point 449 to allow the sum of the SAR by the transmission powers 452 and the SAR predicted at additional future 10 time points to maintain the maximum accumulated SAR or less. According to an embodiment, SAR may include the magnitude of RF exposure. According to an embodiment, when the RF exposure is limited to 1.6w/kg, SAR may be substantially limited to not be absorbed beyond the corresponding RF exposure. For example, the concept of accumulating RF exposure may be the same as the concept of accumulating SAR. The threshold RF exposure may include a threshold (limitation) of accumulated SAR. Hereinafter, SAR may be replaced with RF exposure, and one of ordinary skill in the art will understand that RF exposure may include power density (PD) as well as SAR. As shown in FIG. 4C, the electronic device 101 may identify the transmission powers 453 at the current time point 449 and any past time points 434 to 448 which are 25 time point shifted from the transmission powers 451. The number of transmission powers 453 is 16 and may be 25 smaller than the number, 41, of the transmission powers 451 of FIG. 4A. The electronic device 101 may determine the transmission power at the current time point 449 to allow the sum of the SAR by the transmission powers 453 and the SAR predicted at additional future 34 time points to maintain the maximum accumulated SAR or less. Although not shown, the electronic device 101 may manage a plurality of graphs each of which is one time point shifted. The period of calculating the SAR is the measurement period P of Table 1 and may be, e.g., the interval between the transmission powers in FIGS. 4A to 4C. The electronic device 101 may calculate and/or manage T/P-1 tables for a specific time point. Hereinafter, a configuration of identifying an expected SAR value is described with reference to FIGS. 4D and 4E.

Referring to FIG. 4D, the electronic device 101 may identify the kth SAR table 460. The kth SAR table 460 may include D1, which is the accumulated SAR value 461 at at least one past time point, the maximum SAR value (D2) 462 at the current time, and the expected SAR value (D3) 463 at at least one future time point. Referring to the graph, the accumulated SAR value corresponding to at least one past time point 461 may be D1. According to an embodiment, the SAR cumulative value 461 may include a cumulative value of RF exposure at a past time. D1, which is the accumulated SAR value 461 at at least one past time point may be identified based on the antenna configuration. The number of at least one past time point may be a number that is one smaller than the total number (e.g., 100) of time points corresponding to the measurement time (e.g., 50 seconds) in the first table. N, which is the total number (e.g., 100) of time points may be a result of dividing the measurement time by the sampling period (or shift period). Accordingly, in the kth table, the number of at least one past time point may be k smaller than the total number of time points. The electronic device 101 may identify D1 which is the accumulated SAR value of the N-k past time points 471. The electronic device 101 may use the maximum SAR value S1 for the current time point 472. The maximum SAR value S1 (e.g., the normal max SAR in Table 1) may be the SAR value corresponding to a designated maximum transmission power (e.g., the normal max power of Table 1) in the electronic device 101. In an embodiment, for the current time point 472, the SAR value immediately before the current time point 472 may be used. In an embodiment, for the current time point 472, the average SAR value for the past time points 471 of the current time point 472 may be used. The electronic device 101 may calculate the sum of SAR values S2 (e.g., the back-off max SAR of Table 1) for the transmission power (e.g., the back-off max power of Table 1) backed off, for at least one future time point 473. According to an embodiment, the back-off operation may include an operation of decreasing the transmission power (or the maximum value of transmission power) of the RF signal applied to the antenna based on a designated criterion to meet the SAR criterion. The electronic device 101 may identify D3 as the accumulated SAR for at least one future time point 473. In the kth table, the number of at least one future time point may be k-1. Accordingly, the electronic device 101 may identify whether the total SAR sum D1+D2+D3 for N time points including N-k past time points, one current time point, and k-1 future time points exceeds the maximum accumulated SAR, for the kth table. Upon identifying the excess, the electronic device 101 may back off the transmission power of the current time point. Referring to FIG. 4E, the electronic device 101 may identify the k+1th table 480 as shown in FIG. 4E. For the k+1th table 480, the electronic device 101 may identify D4, which is the accumulated SAR value 481 of at least one past time point, D2, which is the maximum SAR value 482 of the current time point, and D5, which is the expected SAR value 483 of at least one future time point. The electronic device 101 may identify whether the accumulated SAR value of D4+D2+D5 exceeds the maximum accumulated SAR. The number of at least one past time point 491 in the k+1th table may be one smaller than the number of at least one past time point 471 in the kth table. The number of at least one future time point 493 in the k+1th table may be one (494) larger than the number of at least one future time point 473 in the kth table.

According to various embodiments, in operation 303, the electronic device 101 may identify the past accumulated SAR value and the expected SAR value at the current time point and future time point for a plurality of tables corresponding to at least one future time point. The electronic device 101 may identify the accumulated SAR value for a first table and a total of N-1 tables, which are shifted by i time points (where i is 1 or more and less than N-2) from the first table. In operation 305, the electronic device 101 may identify whether there is a table in which the sum of the accumulated SAR value and the expected SAR value exceeds a threshold. If there is a table exceeding the threshold (yes in 305), the electronic device 101 may back off any one (or the maximum transmission power limit (MTPL)) of at least some transmission powers of the RF signals in operation 307. It will be appreciated by one of ordinary skill in the art that the back-off of transmission power may be replaced with back-off of maximum transmission power level in the disclosure. If there is no table exceeding the threshold (no in 305), the electronic device 101 may transmit an RF signal in the set transmission power in operation 309. The back-off of the maximum transmission power value may mean back-off of the maximum transmission power value in various embodiments of the disclosure.

As described above, the electronic device 101 may determine the maximum transmission power value so that the average SAR value used during the measurement time does not exceed the average SAR limit. Or, the electronic device 101 may determine the maximum transmission power value so that the accumulated SAR during the measurement time does not exceed the max accumulated SAR. The electronic device 101 may determine the maximum value of the maximum power for the next time period every time P. For example, conditions for operating in normal max power during next time P may be as follows.

Condition: Tx Room > SAR generated when operating in normal max power during next P (normal max SAR of Table 1) + SAR (back-off max SAR of Table 1) generated when operating in back-off max power during (Remain Time - P) = P X normal max SAR + (Remain Time - P) X back-off max SAR

In the condition, Tx Room may be the max accumulated SAR minus the SAR accumulated up to now. In the condition, (Remain Time - P) may be T - average time - P, e.g., the future time point described in connection with FIG. FIGS. 4A to 4E. P may mean the current time point. Average time may mean the past time point. Meeting the condition may mean that although the electronic device 101 sets the maximum transmission power of the normal max power during time P, there is no table in which the accumulated SAR exceeds the max accumulated SAR. Not meeting the condition may mean that there is a chance of presence of a table in which the accumulated SAR exceeds the max accumulated SAR if the electronic device 101 sets the maximum transmission power of the normal max power during time P, in which case the electronic device 101 may set the back-off max power as the maximum transmission power during time P.

Table 2 shows examples of variables and conditions.

Table 2

| [Example of variable settings] | |
| --- | --- |
| i. | Normal MAX Power : 23dBm |
| ii. | Back-off MAX Power : 20dBm |
| iii. | Measurement Time(T) : 100 seconds |
| iv. | Measurement Period(P) : 0.5 seconds |
| v. | Number of SAR Calculator tables : 199 |
| vi. | Average SAR LIMIT : 1.5mW/g |
| vii. | Max accumulated SAR : 150mW/g |
| viii. | When Normal Max SAR => 23dBm, SAR : 2mW/g |
| ix. | When Back-off Max SAR => 20dBm, SAR : 1mW/g |

[time point when the maximum power switches from normal max power to back-off max power]Average time X normal max power + (100 - average time) X back-off max power <= time point when accumulated max SAR is met

= Average time X 2 mW/g + (100 - average time) X 1mW/g <= 150 mW/g

<=> Average time <=50

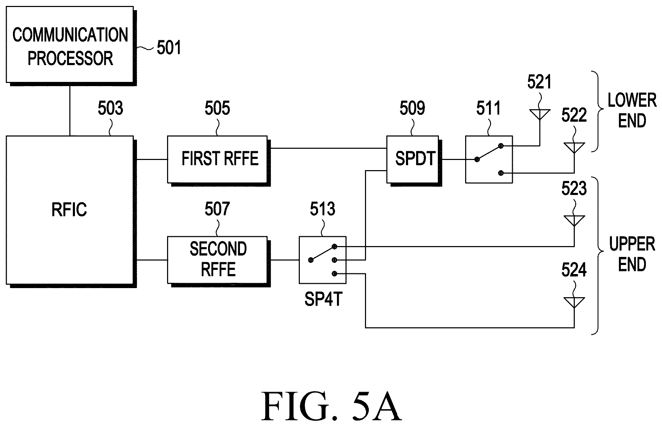

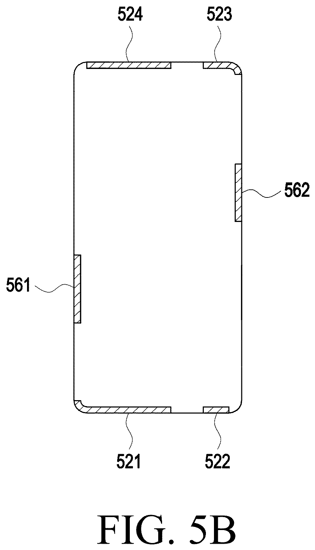

In the example of Table 2, it is described that continuous use of the normal max power in the maximum transmission power for 50 seconds is possible and, after 50 seconds, back-off to the back-off max power is required. For example, it is hypothesized to transmit an RF signal in 23dBm which is the normal max power, for 50 seconds, transmit an RF signal in 23dBm which is the normal max power for the next P (0.5 seconds), and transmit an RF signal in 20dBm which is the back-off max power for 49.5 seconds which is (remain time - P). In this case, Tx Room may be 150mW/g - 50 X 2 mW/g, i.e., 50mW/g. The SAR generated for time P may be 2mW/g X 0.5 seconds, i.e., 1mW/g. The SAR generated during (remain time - P) may be 49.5 seconds X 1mW/g, i.e., 49.5 mW/g. In this case, it may be identified that the accumulated SAR during P and (remain time - P) is 50.5 mW/g which exceeds the Tx room, and thus, it is required to back off the maximum value of the transmission power at time P. The above-described example is described with reference to FIG. 3B which describes the transmission power associated with one RAT. For example, referring to FIG. 3B, up to A seconds (e.g., 50 seconds), the maximum transmission power may be set to the normal max power 351 but, after A seconds, it may be identified to be backed off to the back-off max power 352. The slope of the second portion 362 of the accumulated SAR may be formed to be smaller than the slope of the first portion 361 of the accumulated SAR according to the back-off of the maximum value of the maximum transmission power. It may be identified that the average SAR 331 before A seconds exceeds the average SAR limit 340, but at the time when it is 100 seconds according to back-off, the average SAR 332 is identical to the value of the average SAR limit 340.FIG. 5A is a block diagram illustrating an example electronic device according to various embodiments; The embodiment of FIG. 5A is described with reference to FIG. 5B. FIG. 5B is a view illustrating an example electronic device according to various embodiments;

According to various embodiments, the communication processor 501 (e.g., at least one of the first communication processor 212, the second communication processor 214, or the integrated communication processor 260) may transmit and/or receive a baseband signal to/from an RFIC 503 (e.g., at least one of the first RFIC 222, the second RFIC 224, the third RFIC 226, or the fourth RFIC 228). The RFIC 503 may process at least one RF signal associated with at least one RF path. Here, the RF path may include, e.g., at least one piece of hardware (e.g., at least one of an RFIC, RFFE, or antenna) for transmitting an RF signal. For example, the RFIC 503 may receive at least one baseband signal from the communication processor 501 and generate at least one or more RF signals. It will be appreciated by one of ordinary skill in the art that although the RFIC 503 is shown as one module in the example of FIG. 5A, this is an example, and the number of modules in which the RFIC 503 is implemented is not limited.

According to various embodiments, the RFIC 503 may provide at least one RF signal to the first RFFE 505 and/or the second RFFE 507. The first RFFE 505 and/or the second RFFE 507 may process (e.g., amplify) the received RF signal and provide the same. The communication processor 501 may determine the amplification degree of the RFFEs 505 and 507 based on the maximum transmission power level and/or transmission power determined as described above. Although not shown, the amplification degree of the RFFEs 505 and 507 may be controlled based on an average power tracking (APT) module and/or an envelope tracking (ET) module. According to various embodiments, one RFFE may process a plurality of RF signals.

According to various embodiments, the first RFFE 505 may be connected to a single pole double throw (SPDT) switch 509, and an output terminal of the SPDT switch 509 may be connected to the switch 511. The switch 511 may be configured to selectively connect the output terminal of the SPDT switch 509 to either the first antenna 521 or the second antenna 522. The second RFFE 507 may be connected to the switch 513. The switch 513 may be configured to selectively connect the output end of the second RFFE 507 to any one of the SPDT switch 509, the third antenna 523, or the fourth antenna 524. Meanwhile, each of the antennas 521, 522, 523, and 524 may be disposed inside the housing and/or may be disposed on a portion of the housing. For example, it may be disposed on the outer surface of the housing of the electronic device 101, but is not limited thereto. In one example, as shown in FIG. 5B, the antennas 521 and 522 may be disposed on one side (e.g., lower end) of the housing of the electronic device 101, and the antennas 523 and 524 may be disposed on the other side (e.g., upper end) of the housing of the electronic device 101, but this is exemplary.

For example, whether it is determined whether the restrictions (e.g., SAR restrictions) are violated based on the sum of radio frequency (RF) exposures (e.g., SARs and/or PDs) generated by the plurality of antennas or it is determined whether each of the exposures generated by the plurality of antennas independently violates the restrictions may be determined by Equation 1 below.

$$[Equation\ 1]$$

$$(SAR_1 + SAR_2)^{1.5}/R \leq 0.04$$

In Equation 1, $SAR_1$ may be the SAR generated by one antenna, and $SAR_2$ may be the SAR generated by another antenna, and their unit may be, e.g., W/kg. R for the sum of various SARs may be shown in Table 3, for example. Meanwhile, the values, 1.5 and 0.04, in Equation 1 are merely exemplary and are not limited thereto.

[Table 3]

| Sum of SARs ($SAR_1 + SAR_2$) (W/Kg) | Minimum separation distance (minimum value of R) (mm) |
|---|---|
| 3.2 | 143 |
| 2.8 | 117 |
| 2.4 | 93 |
| 2 | 71 |
| 1.6 | 51 |
| 1.4 | 41 |
| 1.2 | 33 |
| 1.0 | 25 |
| 0.8 | 18 |

For example, it is assumed that the sum of the SARs generated from two antennas is 3.2W/Kg. Meanwhile, as both the antennas are disposed at an upper end of the electronic device 101, the separation distance may be less than 143mm. In this case, to determine whether the instantaneous SAR rule is violated or the cumulative SAR rule is violated in the electronic device 101, it may be required to determine whether the sum of the SARs generated from the two antennas violates the SAR rule. To observe the SAR rule, the electronic device 101 may perform back-off associated with the transmission power of the RF signal for any one of the two antennas. Meanwhile, when an RF signal in FR2 is transmitted, power density (PD) may replace SAR. For example, it will be appreciated by one of ordinary skill in the art that when SAR and PD both are considered, the sum of RF exposures may be identified as the sum of the value obtained by dividing the SAR by the maximum SAR and the value obtained by dividing the PD by the maximum PD, and the minimum spacing corresponding to the sum of RF exposures may be determined. One of ordinary skill in the art will understood that 'RF exposure' in the disclosure may mean, e.g., SAR, PD, total radiated power (TRP), and/or effective isotropic radiated power (EIRP). RF exposure may be referred to, e.g., as RF radiation dose, or RF intensity, and one of ordinary skill in the art will understand that there is no limitation to the name. For example, there is no limit to the reference point of each antenna for defining the distance between antennas. For example, the reference point may be set, in various manners, as the point where the maximum magnitude of RF is generated from the antenna, the center of gravity of the antenna, or one point at one end of the antenna, but the manner of setting it is not limited. For example, as the two antennas are disposed at a lower end and upper end, respectively, of the electronic device 101, the separation distance may be 143mm or more. In this case, to determine whether the cumulative SAR rule is violated, the electronic device 101 may be required to determine whether the sum of SARs generated from one of the two antennas violates the SAR rule and/or whether the sum of SARs generated from the other one of the two antennas violates the SAR rule.

As described above, the antennas for which the sum of SARs is considered to determine whether the SAR rule is violated as Equation 1 is met may be represented as included in the same antenna group. When the distance between antennas is relatively small (e.g., smaller than the distance related to Equation 1), they may be included in the same antenna group. Further, the antennas for which SARs are considered independently, rather than the sum of SARs, to determine whether the SAR rule is violated as Equation 1 is not met may be represented as included in different antenna groups. When the distance between antennas is relatively large (e.g., larger than the distance related to Equation 1), they may be included in different antenna groups.

In an embodiment, the antenna 523 positioned at an upper end of the electronic device 101 and an antenna 522 positioned at a lower end of the electronic device 101 may be included in different antenna groups, respectively. Accordingly, the electronic device 101 may independently manage whether to back off based on the RF exposure based on the antenna 523 and whether to back off based on the RF exposure based on the antenna 522. For example, the electronic device 101 may set the antenna 522 as the transmission antenna at a first time. The electronic device 101 may determine whether to back off, based on the RF exposure (e.g., the cumulative RF exposure at a past time) associated with the antenna group to which the antenna 522 belongs. If the condition for changing the transmission antenna is met at a second time, the electronic device 101 may change the transmission antenna from the antenna 522 to the antenna 523. After the second time, the electronic device 101 may determine whether to back off, based on the RF exposure (e.g., the cumulative RF exposure at a past time) associated with the antenna group to which the antenna 523 belongs. Meanwhile, the change of the transmission antenna may be referred to as transmission antenna switching or transmission antenna hopping. For example, the change of the transmission antenna may be performed based on the control of the switch (e.g., 509, 511, and/or 513) and/or the change of the RF element (e.g., a power amplifier (PA)), but the method is not limited thereto. For example, when the communication processor 501 identifies that the transmission antenna is to be changed, the communication processor 501 may control at least some of RF circuits (e.g., the RFIC 503, the RFFEs 505 and 507), and/or switches (e.g., 509, 511, and/or 513).

In an embodiment, as the distance between the antenna 562 and the antenna 523 does not meet Equation 1, the antenna 562 and the antenna 523 may be included in the same antenna group. As the distance between the antenna 562 and the antenna 522 does not meet Equation 1, the antenna 562 and the antenna 522 may be included in the same antenna group. As the antenna 562 is included in the antenna group of the antenna 522 and is also included in the antenna group of the antenna 523, the antenna 562 may be referred to as a shared antenna.

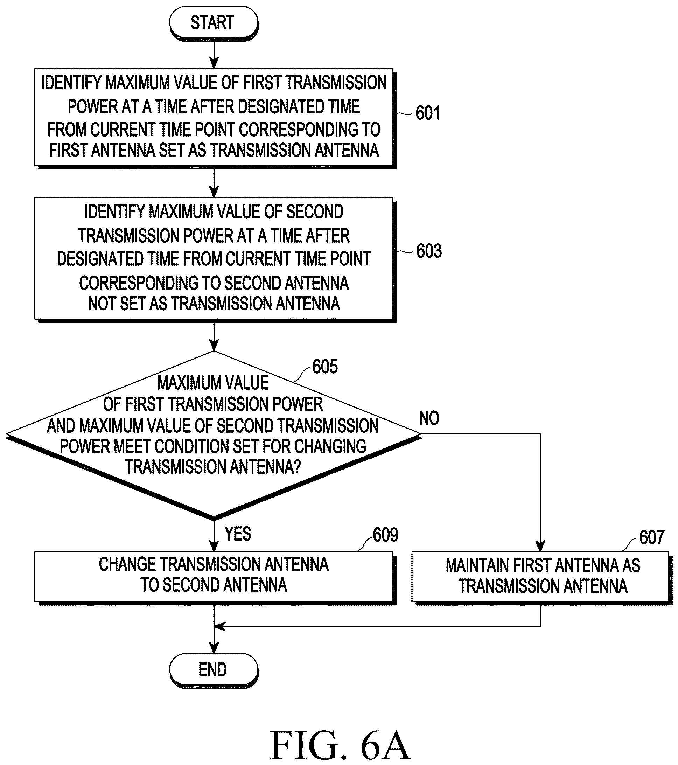

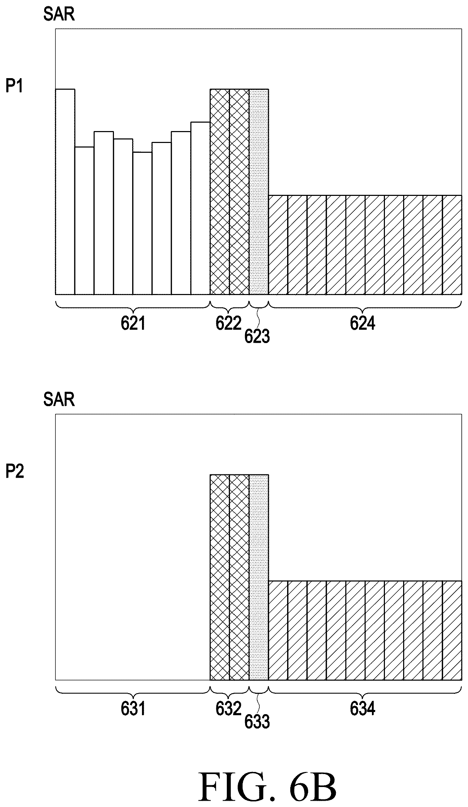

FIG. 6A is a flowchart illustrating an operation method of an electronic device according to an embodiment. The embodiment of FIG. 6A is described with reference to FIG. 6B. FIG. 6B is a view illustrating the RF exposure corresponding to two antennas according to an embodiment.

According to an embodiment, in operation 601, the electronic device 101 (e.g., the communication processor 501) may identify the maximum value of the first transmission power corresponding to the first antenna set as the transmission antenna at a time after a designated time from the current time point. For example, referring to FIG. 6B, the electronic device 101 may identify the maximum value of the first transmission power corresponding to a first antenna set as a transmission antenna of the electronic device 101, corresponding to a time point after at least one first time point, based on first RF exposure 621 corresponding to at least one first past time point of a designated period set for the first antenna, second RF exposure 622 corresponding to the at least one first time point after the at least one past time point based on first designated transmission power, third RF exposure 624 corresponding to at least one first future time point except for the at least one first past time point of the designated period, the at least one first time point, and one time point (e.g., the time corresponding to the first remaining SAR 623 in FIG. 6B) after the at least one first time point, and a threshold RF exposure allocated for the designated period. Here, the first RF exposure 621 may be the sum of RF exposures that have been already generated at at least one first past time point of a designated period (which may be referred to as, e.g., a timetable) based on the first antenna, and this may be identified based on information about the already generated RF exposure and/or information about the transmission power of the already transmitted RF signal. For example, the first RF exposure 621 may be the sum of RF exposures already generated in the antenna group including the first antenna. Here, the second RF exposure 622 may be the sum of RF exposures generated when an RF signal is transmitted at a first designated transmission power (e.g., P1) during at least one first time point (e.g., a designated time in FIG. 6A, and two time point units in the example of FIG. 6B). The number of at least one first time point (e.g., the designated time in FIG. 6A) may be set to be greater than, e.g., a first period for determining whether to change the transmission antenna and/or may be set as a multiple of a second period for determining the maximum value of the transmission power, but this is illustrative and the setting method is not limited thereto. For example, when the first period for determining whether to change the transmission antenna is 640 ms and the second period for determining the maximum value of the transmission power is 100 ms, 700 ms, as a multiple of 100 ms which is 640 ms or more, may be set as the designated time in FIG. 6A, and in this case, the number of at least one first time point may be seven which is 700 ms/100 ms. Here, the first designated transmission power may be, e.g., a maximum transmission power that is not backed off, a transmission power requested by a network, a transmission power at a immediately previous time, or a value (which may be, e.g., a maximum value, an average value, or a median value, but is not limited) identified based on at least a part of at least one first past time point, and there is no limitation on the example of the first designated transmission power. Here, the third RF exposure 623 may be the sum of RF exposures expected to be generated based on, e.g., a back-off maximum transmission power level at at least one first future time point, and may be referred to as a minimum requested RF exposure.

For example, the electronic device 101 may subtract the sum of the first RF exposure 621, the second RF exposure 622, and the third RF exposure 624 from the threshold RF exposure allocated for the designated period. The subtraction result may be referred to as a first remaining SAR 623, which may be expressed as Equation 2.

first remaining SAR 623=threshold RF exposure-[first RF exposure 621+second RF exposure 622 +third RF exposure 624]                                    [Equation 2]

The electronic device 101 may identify the maximum value of the first transmission power corresponding to one time point (e.g., a time point after a designated time from the current time point in FIG. 6A) after at least one first time point, based on the first remaining SAR 623. Here, the maximum value of the first transmission power may be, e.g., the MTPL, e.g., the maximum value of the transmission power supported by the electronic device 101, the target power, or the transmission power required by the network, but the type is not limited. For example, the maximum value of the first transmit power may be set to be the smaller of the MTPL and PcMax values, but is not limited thereto.

Referring back to FIG. 6A, the electronic device 101 may identify the maximum value of the second transmission power at a time point after a designated time from the current time point corresponding to the second antenna which is not set as the transmission antenna. For example, it is assumed that the electronic device 101 supports changing the transmission antenna between the first antenna and the second antenna, and it is assumed that the first antenna is set as the transmission antenna while operations 601 and 603 are performed. For example, based on the first antenna being the default transmission antenna, the electronic device 101 may set the first antenna as the transmission antenna. For example, the electronic device 101 may use the second antenna as the transmission antenna, and may set the first antenna as the transmission antenna based on satisfaction of the transmission antenna change condition, but there is no limitation on the method in which the first antenna is set as the transmission antenna or the time point thereof.

For example, referring to FIG. 6B, the electronic device 101 may identify the maximum value of the second transmission power corresponding to a second antenna not set as the transmission antenna, corresponding to a time point after at least one first time point, based on fourth RF exposure 631 corresponding to at least one first past time point of a designated period set for the second antenna, fifth RF exposure 632 corresponding to the at least one first time point after the at least one past time point based on second designated transmission power (e.g., P2), sixth RF exposure 634 corresponding to at least one first future time point except for the at least one first past time point of the designated period, the at least one first time point, and one time point (e.g., the time point corresponding to the second remaining SAR 633 in FIG. 6B) after the at least one first time point, and a threshold RF exposure allocated for the designated period.

Here, the fourth RF exposure 631 may be the sum of RF exposures that have been already generated at at least one first past time point of a designated period (which may be referred to as, e.g., a timetable) based on the second antenna, and this may be identified based on information about the already generated RF exposure and/or information about the transmission power of the already transmitted RF signal. In the embodiment of FIG. 6B, the fourth RF exposure 631 that has already been generated at at least one first past time point based on the second antenna is described as 0, but this is merely an example and may be a non-zero value. For example, when an RF signal is transmitted based on the second antenna at some past time points among at least one first past time point, the RF exposure at some past time points is set as the fourth RF exposure 631, and thus may be a non-zero value. In this case, the RF exposure based on the first antenna at some past time points may be 0. Alternatively, at at least some past time points among the at least one first past time point, the RF exposure may not be 0 in the antenna group including the second antenna, and the corresponding RF exposure may not be 0 as it is counted as a part of the fourth RF exposure 631.

Here, the fifth RF exposure 632 may be the sum of RF exposures generated when an RF signal is transmitted at a second designated transmission power (e.g., P2) during at least one first time point (e.g., a designated time in FIG. 6A, and two time units in the example of FIG. 6B). Here, the second designated transmission power may be, e.g., a maximum transmission power that is not backed off or a value (which may be, e.g., a maximum value, an average value, or a median value, but is not limited) identified based on at least a part of at least one first past time point, and there is no limitation on the example of the second designated transmission power. The second designated transmission power may be set to be the same as or different from the first designated transmission power, and is not limited thereto. Here, the sixth RF exposure 634 may be the sum of RF exposures expected to be generated based on, e.g., a back-off maximum transmission power level at at least one first future time point. For example, the electronic device 101 may subtract the sum of the fourth RF exposure 631, the fifth RF exposure 632, and the sixth RF exposure 634 from the threshold RF exposure allocated for the designated period. The subtraction result may be referred to as a second remaining SAR 633, which may be expressed as Equation 3.

$$\text{second remaining SAR 633} = \text{threshold RF exposure} - [\text{fourth RF exposure 631} + \text{fifth RF exposure 632} + \text{sixth RF exposure 634}] \qquad \text{[Equation 3]}$$

The electronic device 101 may identify the maximum value of the second transmission power corresponding to one time point (e.g., a time point after a designated time from the current time point in FIG. 6A) after at least one first time point, based on the second remaining SAR 633. Through the above-described process, the maximum value of the first transmission power corresponding to one time point after at least one first time point corresponding to the first antenna and the maximum value of the second transmission power corresponding to one time point after at least one first time point corresponding to the second antenna may be identified.

Referring back to FIG. 6A, in operation 605, the electronic device 101 may identify whether the maximum value of the first transmission power corresponding to the first antenna identified in operation 601 and the maximum value of the second transmission power corresponding to the second antenna identified in operation 603 meet a condition set for changing the transmission antenna. If the condition set for changing the transmission antenna is not met (No in 605), the electronic device 101 may maintain the transmission antenna as the first antenna in operation 607. If the condition set for changing the transmission antenna is met (Yes in 605), the electronic device 101 may change the transmission antenna to the second antenna in operation 609. For example, the electronic device 101 may determine whether the condition set for changing the transmission antenna as shown in Equation 4 is met.

$$[\text{maximum value of second transmission power} - \text{maximum power of first transmission power}] > \text{first difference threshold?} \qquad \text{[Equation 4]}$$

As shown in Equation 4, the electronic device 101 may identify whether the difference between the maximum values of the transmission power exceeds (or may be greater than or equal to) a first difference threshold as whether the condition set for changing the transmission antenna is met. The difference between the maximum values may be defined as, e.g., a value obtained by subtracting the maximum value of the transmission power corresponding to the antenna set as the transmission antenna from the maximum value of the transmission power corresponding to the antenna not set as the transmission antenna, but is not limited thereto. For example, when the difference between the maximum values of the transmission power exceeds the first difference threshold, the electronic device 101 may change the transmission antenna. For example, when the difference between the maximum values of the transmission power is less than or equal to the first difference threshold, the electronic device 101 may maintain the transmission antenna.

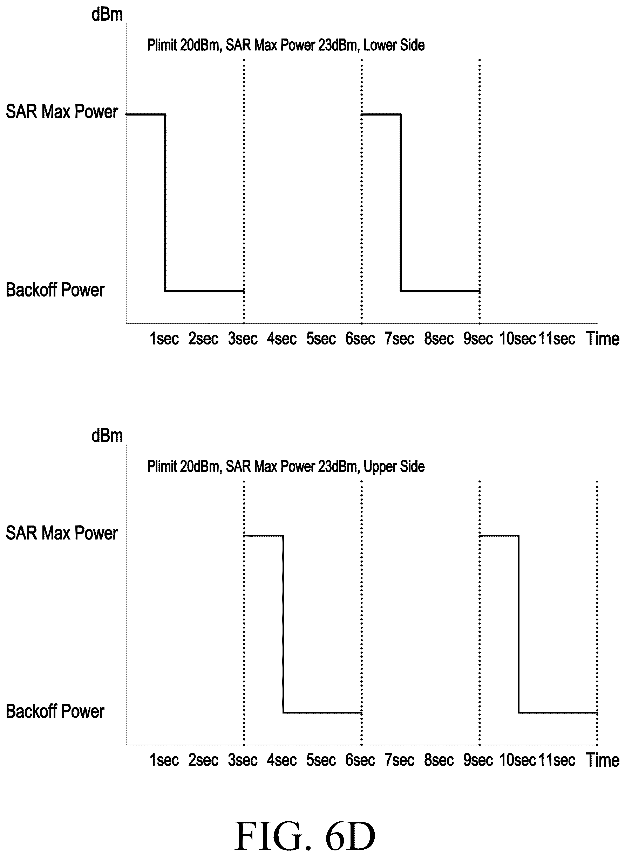

Whether to change the transmission antenna may be determined based on the difference between maximum values of the transmission power at a time point (e.g., one time point after at least one first time point in FIG. 6B) after a designated time from the current time point rather than determining whether to change the transmission antenna based on the difference between the maximum values of the transmission power at the current time point as described above. Accordingly, the maximum value of the transmission power may not be back off during the designated time, which may mean that the maximum value of the transmission power in any one antenna does not abruptly change at least within the designated time. As there is no abrupt change in the maximum value of the transmission power in any one antenna, it may be relatively less likely that the transmission antenna change condition as in Equation 4 is met, which may mean that it is relatively less likely that the transmission antenna change is performed for the designated time. For example, relatively frequent transmission antenna changes when the pre-generated RF exposure in the timetable is relatively high (in other words, the margin of the RF exposure is relatively low) may be prevented. Further, e.g., even if back-off is performed after the designated time, the transmission antenna may not be changed, which is described with reference to FIG. 6D.

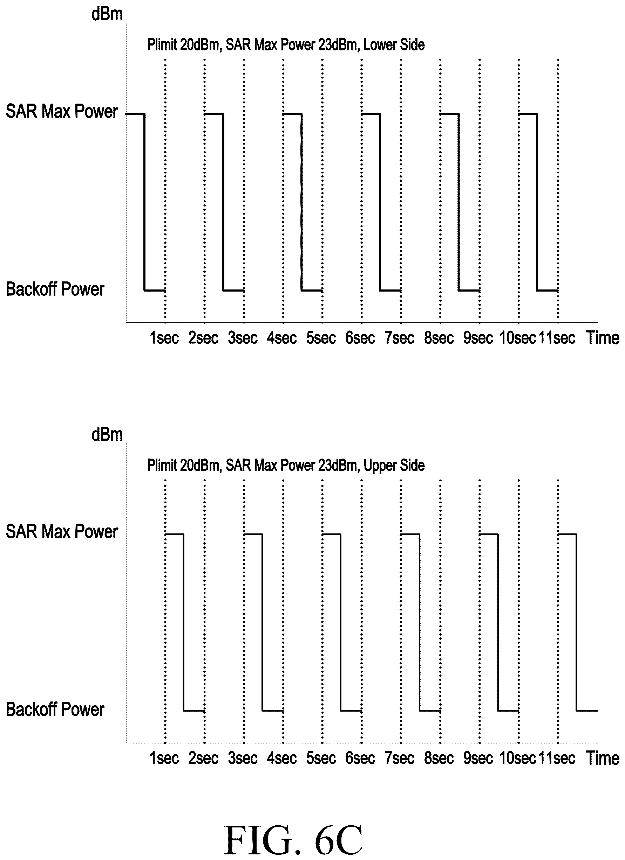

For example, in the comparative example, when the margin of the RF exposure is relatively low, the back-off occurs relatively frequently, and thus it is highly likely that the transmission antenna change condition is relatively frequently met. However, as described above, as whether to change the transmission antenna is determined based on the maximum value of the transmission power at a time point after the designated time from the current time point, back-off may be prevented, and/or although back-off is performed, the possibility (or number of time points) of meeting the transmission antenna change condition may also be reduced, which is described with reference to FIGS. 6C and 6D.

FIG. 6C is a view illustrating a change of transmission antennas according to a comparative example. FIG. 6D is a view illustrating a change of transmission antennas according to an embodiment.

For example, in the example of FIG. 6C, it is assumed that the Plimit for the first antenna (the antenna disposed on the lower side) is 20 dBm and the Plimit for the second antenna (the antenna disposed on the upper side) is 20 dBm. For example, when an SAR limit allocated for a designated period (e.g., the size of the timetable) (e.g., T seconds) is set, a value obtained by dividing the SAR limit by the designated period (e.g., the size of the timetable) may be the Pimit, but is not limited thereto. For example, when an RF signal is applied at Plimit for T seconds, the cumulative SAR value may be the SAR limit. For example, a maximum value of transmission power (SAR max power) that is not backed off corresponding to the first antenna and the second antenna may be 23 dBm. For example, in the example of FIG. 6C, the transmission antenna may be the first antenna at a time point of 0 seconds. The maximum value of the transmission power of the first antenna, which is the transmission antenna, may be backed off from the SAR Max power (e.g., 23 dBm) to the Back-off Power. Meanwhile, the maximum value of the transmission power of the second antenna other than the transmission antenna at the corresponding time point may be SAR Max power (e.g., 23 dBm). The difference between the maximum values of the transmission power may be (SAR Max power - Back-off Power), and for example, a transmission antenna change condition may be met. Accordingly, the transmission antenna may be changed to the second antenna, and accordingly, an RF signal may be applied to the second antenna in a period of 1 second to 2 seconds. Meanwhile, when the SAR margin corresponding to the second antenna is also a relatively low value, the maximum value of the transmission power of the second antenna, which is the transmission antenna, may be backed off from the SAR Max power (e.g., 23 dBm) to the Back-off Power (e.g., 17 dBm). Meanwhile, the maximum value of the transmission power of the first antenna other than the transmission antenna at the corresponding time point may be SAR Max power (e.g., 23 dBm). The difference between the maximum values of the transmission power may be (SAR Max power - Back-off Power), and for example, a transmission antenna change condition may be met. Accordingly, the transmission antenna may be changed to the second antenna, and accordingly, an RF signal may be applied to the second antenna in a period of 2 seconds to 3 seconds. According to the comparative example, as the above-described process is repeated, the transmission antenna may be changed every second. Since the change of the transmission antenna requires the change of the RF path, data transmission delay and/or failure may occur during the time required for the change of the RF path, and it may be preferable to reduce the number of transmission antenna changes. Hereinafter, a decrease in the number of transmission antenna changes according to an embodiment is described with reference to FIG. 6D.

For example, in the example of FIG. 6D, it is assumed that the Plimit for the first antenna (the antenna disposed on the lower side) is 20 dBm and the Plimit for the second antenna (the antenna disposed on the upper side) is 20 dBm. As described above, according to an embodiment, the electronic device 101 may identify (or schedule) the maximum values of the transmission power so as to allocate a designated magnitude (e.g., 23 dBm) for a designated time, e.g., for one second. For example, in the example of FIG. 6D, it is assumed that the designated time is "1 second". For example, for convenience of description, the SAR value consumed when transmitted at a Plimit of 20 dBm for 1 second is defined as 1 unit. For example, it is assumed that the maximum value of the back-off transmission power is 17 dBm, and accordingly, the reserved SAR value per second may be 0.5 units. As described above, in order to be transmitted at a designated magnitude of 23 dBm for a designated time of "1 second", e.g., an SAR margin of 2 units may be required. 3 seconds may be required to consume as much SAR margin as 2 units. For example, an SAR value of 1.5 units may be secured according to 3 seconds X 0.5 units. By adding 0.5 units for 1 second for transmission of a designated magnitude of 23 dBm to 1.5 units, an SAR margin of 2 units may be secured. As described above, 3 seconds may be requested to transmit at 23 dBm for 1 second, which is the designated time. Accordingly, e.g., if the SAR margin remains as much as the reserved SAR value, non-transmission of the RF signal for the previous 3 seconds may be required for transmission at 23 dBm for 1 second. For example, 0 seconds to 3 seconds of FIG. 6D are referred to. For the lower antenna set as the transmission antenna, 23 dBm may be set for 0 seconds to 1 second corresponding to the designated time "1 second", and 17 dBm which is backed off may be set for 1 second to 3 seconds. For the upper antenna which is not the transmission antenna, the RF signal may not be transmitted for 0 seconds to 3 seconds for transmission at 23 dBm for the next 1 second. Accordingly, the transmission antenna may be changed every 3 seconds. As described above, the electronic device 101 may adjust the maximum value of the transmission power to perform transmission at 23 dBm for one second, which is the designated time, and accordingly, the transmission antenna change period may increase compared to the comparative example of FIG. 6C.

As described above, since a time of 3 seconds is required for transmission at 23 dBm for 1 second, which is the designated time, as shown in FIG. 6D, the period of changing the transmission antenna may be relatively large as 3 seconds.

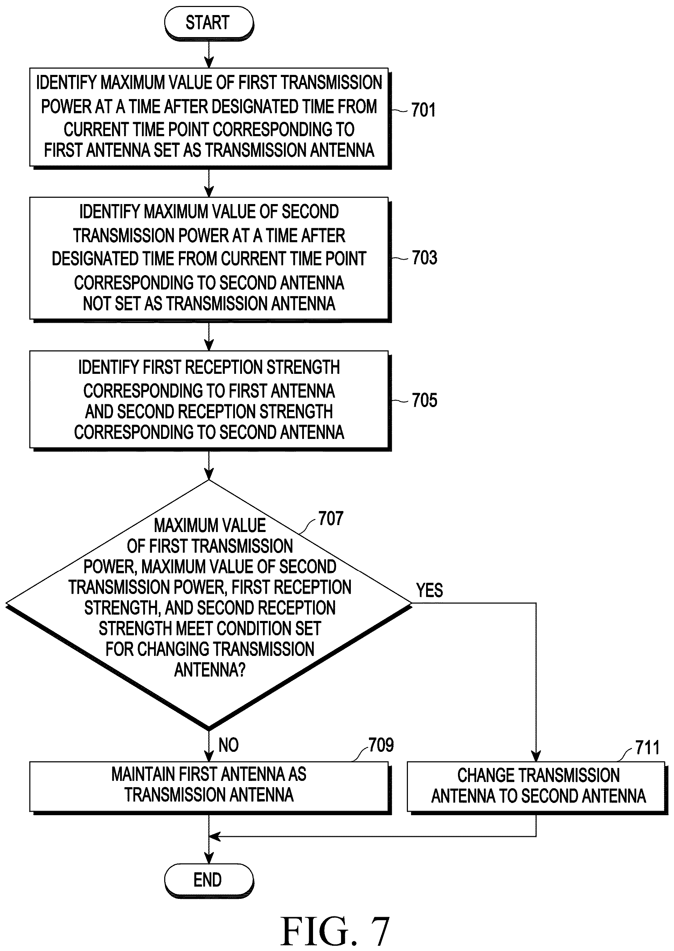

FIG. 7 is a flowchart illustrating a method for operating an electronic device according to an embodiment.

According to an embodiment, in operation 701, the electronic device 101 (e.g., the communication processor 501) may identify the maximum value of the first transmission power at a time point after a designated time from the current time point corresponding to the first antenna set as the transmission antenna. In operation 703, the electronic device 101 may identify the maximum value of the second transmission power at a time point after a designated time from the current time point corresponding to the second antenna not set as the transmission antenna. Meanwhile, the identification of the maximum value of the first transmission power in operation 701 and the maximum value of the second transmission power in operation 703 has been described with reference to FIGS. 6A and 6B, and thus the description thereof is not repeated. In operation 705, the electronic device 101 may identify a first reception strength corresponding to the first antenna and a second reception strength corresponding to the second antenna. For example, the reception strength may be expressed as reference signal received power (RSRP), but this is merely an example, and may be expressed in units such as signal to noise ratio (SNR), reference signal received quality (RSRQ), or received signal strength indicator (RSSI), but is not limited thereto. In operation 707, the electronic device 101 may identify whether the maximum value of the first transmission power, the maximum value of the second transmission power, the first reception strength, and the second reception strength meet a condition set for changing the transmission antenna. When the condition is not met (No in operation 707), the electronic device 101 may maintain the transmission antenna as the first antenna in operation 709. When the condition is met (Yes in operation 707), the electronic device 101 may change the transmission antenna to the second antenna in operation 711.

For example, the electronic device 101 may identify whether the maximum value of the first transmission power, the maximum value of the second transmission power, the first reception strength, and the second reception strength meet a condition set for changing the transmission antenna, as in Equation 5.

[second reception strength-first reception strength]+[maximum value of second transmission power-maximum value of first transmission power]>second difference threshold? [Equation 5]

As shown in Equation 5, the electronic device 101 may identify whether the sum of the difference in reception strength at the current time point and the difference between the maximum values of the transmission power at a time point after a designated time from the current time point exceeds (or may be greater than or equal to) a second difference threshold as whether the condition set for changing the transmission antenna is met. Here, the second difference threshold may be different from the first difference threshold, but may be set to be the same and is not limited. For example, when the sum of the difference in reception strength at the current time point and the difference between maximum values of the transmission power at the time point after the designated time from the current time point exceeds the second difference threshold, the electronic device 101 may change the transmission antenna. For example, when the sum of the difference in reception strength at the current time point and the difference between maximum values of the transmission power at the time point after the designated time from the current time point is the second difference threshold or less, the electronic device 101 may maintain the transmission antenna. As described above, even when the difference between the maximum values of the transmission power at the time point after the designated time from the current time point is relatively low, if the difference in reception strength at the current time point is relatively large, the electronic device 101 may change the transmission antenna.

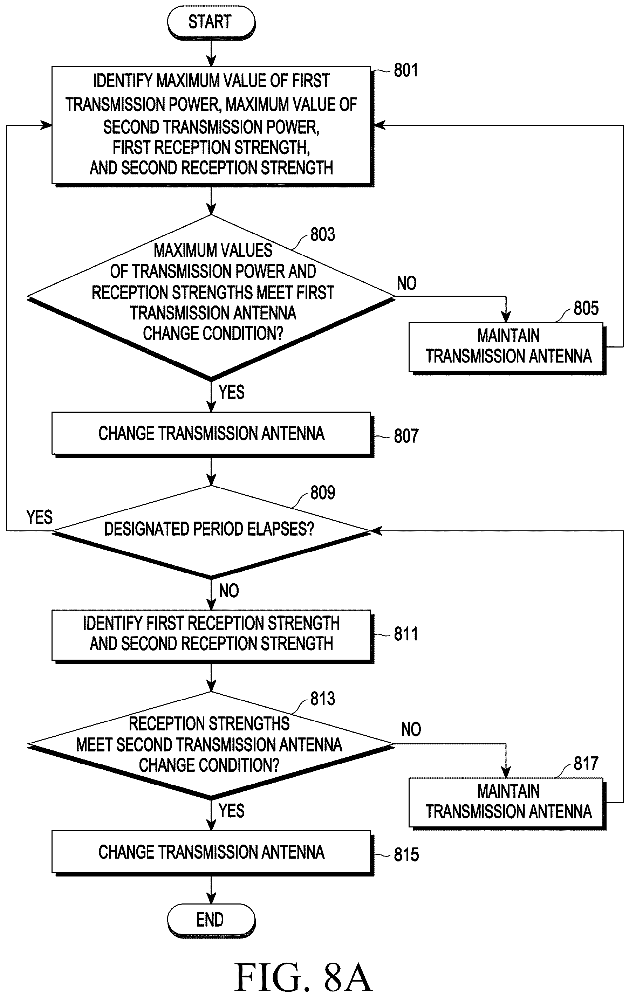

FIG. 8A is a flowchart illustrating an operation method of an electronic device according to an embodiment;

According to an embodiment, in operation 801, the electronic device 101 (e.g., the communication processor 501) may identify the maximum value of the first transmission power at a time point after a designated time from the current time point corresponding to the first antenna set as the transmission antenna, the maximum value of the second transmission power at the time point after the designated time from the current time point corresponding to the second antenna, the first reception strength at the current time point corresponding to the first antenna, and the second reception strength at the current time point corresponding to the second antenna. In operation 803, the electronic device 101 may identify whether the maximum values of the transmission power and the reception strengths meet the first transmission antenna change condition. For example, as shown in Equation 5, the electronic device 101 may identify whether the sum of the difference in reception strength at the current time point and the difference between the maximum values of the transmission power at a time point after a designated time from the current time point exceeds (or may be greater than or equal to) a second difference threshold as whether the condition set for changing the first transmission antenna is met. When the first transmission antenna change condition is not met (No in 803), the electronic device 101 may maintain the transmission antenna in operation 805. When the first transmission antenna change condition is met (Yes in 803), the electronic device 101 may change the transmission antenna in operation 807. Alternatively, instead of Equation 5, the electronic device 101 may identify whether the difference between the maximum values of the transmission power exceeds (or may be greater than or equal to) the first difference threshold as whether the first transmission antenna change condition is met, as shown in Equation 4.

According to an embodiment, after the transmission antenna is changed in operation 807, the electronic device 101 may determine whether to change the transmission antenna based on the reception strengths respectively corresponding to the antennas without considering the maximum value of the transmission power before the designated period elapses. For example, when Equation 5 is met, the electronic device 101 may determine whether to change the transmission antenna based on the reception strengths respectively corresponding to the antennas without considering the maximum value of the transmission power before the designated period elapses after the transmission antenna is changed. For example, the electronic device 101 may determine whether Equation 5 is met. When Equation 5 is met by the differences between the maximum values of transmission power, the electronic device 101 does not change the transmission antenna and, before the designated period elapses, may determine whether to change the transmission antenna based on the reception strengths respectively corresponding to the antennas without considering the maximum value of the transmission power. For example, when Equation 4 is met, the electronic device 101 may determine whether to change the transmission antenna based on the reception strengths respectively corresponding to the antennas without considering the maximum value of the transmission power before the designated period elapses after the transmission antenna is changed.

After the transmission antenna is changed in operation 807, the electronic device 101 may identify whether the designated period elapses after the transmission antenna is changed in operation 809. If the designated period does not elapse (No in 809), the electronic device 101 may identify the first reception strength and the second reception strength in operation 811. The electronic device 101 may identify whether the reception strengths meet the second transmission antenna change condition. When the reception strengths meet the second transmission antenna change condition (Yes in 813), the electronic device 101 may change the transmission antenna in operation 815. When the reception strengths do not meet the second transmission antenna change condition (No in 813), the electronic device 101 may maintain the transmission antenna in operation 817. When the transmission antenna is maintained, the electronic device 101 may again identify whether the designated period elapses in operation 809. If the designated period elapses, the electronic device 101 may again identify whether to change the transmission antenna according to whether the maximum values of the transmission power and the reception strengths meet the first transmission antenna change condition, as in operations 801 and 803.

In one example, the electronic device 101 may identify whether the second transmission antenna change condition is met based on the reception strengths as shown in Equation 6.

$$[\text{Equation 6}]$$

$$[\text{second reception strength-first reception strength}] > \text{third difference threshold?}$$

As shown in Equation 6, the electronic device 101 may identify whether the difference in reception strength at the current time point exceeds (or may be greater than or equal to) a third difference threshold as whether the second transmission antenna change condition is met. Here, the third difference threshold may be different from the first difference threshold and/or the second difference threshold, but may be set the same, and is not limited. For example, when the difference in reception strength at the current time point exceeds the third difference threshold, the electronic device 101 may change the transmission antenna. For example, when the difference in reception strength at the current time point is less than or equal to the third difference threshold, the electronic device 101 may maintain the transmission antenna.

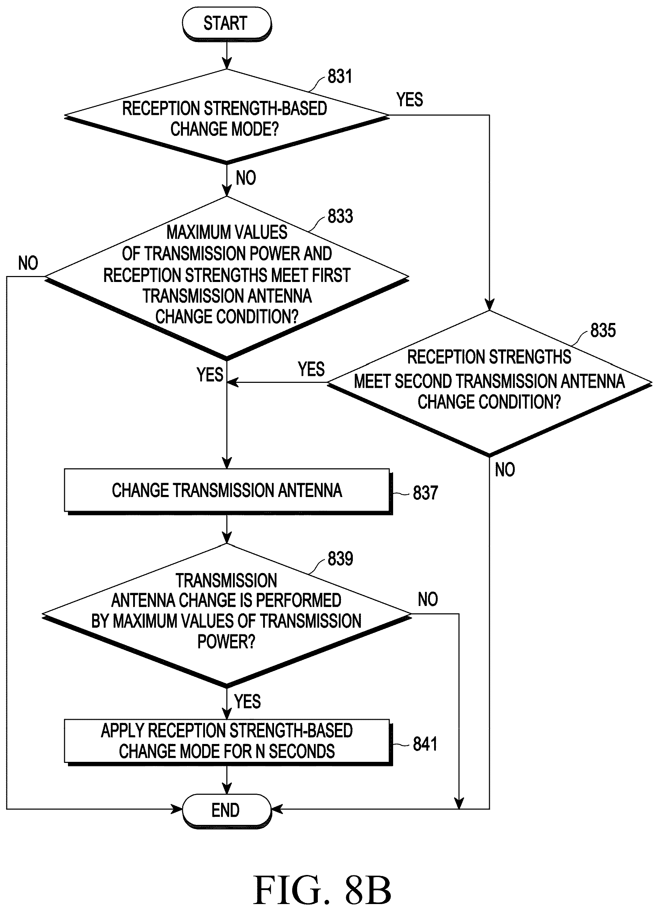

FIG. 8B is a flowchart illustrating an operation method of an electronic device according to an embodiment.

According to an embodiment, the electronic device 101 (e.g., the communication processor 501) may identify whether the mode is a change mode based on the reception strength in operation 831. Here, the change mode based on the reception strength may refer to a mode in which the electronic device 101 identifies whether to change the transmission antenna only based on the difference between the reception strengths without considering the difference in the maximum value of the transmission power. When the mode is not the reception strength-based change mode (No in 831), the electronic device 101 may identify whether the maximum values of the transmission power and the reception strengths meet the first transmission antenna change condition in operation 833. For example, the electronic device 101 may identify whether the maximum values of the transmission power and the reception strengths meet the first transmission antenna change condition as shown in Equation 5. When the first transmission antenna change condition is met (Yes in 833), the electronic device 101 may change the transmission antenna in operation 837. When the mode is the reception strength-based change mode (Yes in 831), the electronic device 101 may identify whether the reception strengths meet the second transmission antenna change condition in operation 835. For example, the electronic device 101 may identify whether the reception strengths meet the second transmission antenna change condition as shown in Equation 6. When the second transmission antenna change condition is met (Yes in 835), the electronic device 101 may change the transmission antenna in operation 837. After changing the transmission antenna, the electronic device 101 may identify whether the change of the transmission antenna is performed by the maximum values of the transmission power in operation 839. For example, when the first transmission antenna change condition is met in operation 833, if the magnitude of the difference between the reception strengths is equal to or less than a threshold reception strength difference, the electronic device 101 may determine that the transmission antenna change is performed by the maximum values of the transmission power, but the method is not limited thereto. If it is determined that the transmission antenna change is performed by the maximum values of transmission power (Yes in 839), the electronic device 101 may determine to apply (or activate) the reception strength-based change mode for N seconds in operation 841. As described above, when the transmission antenna change is performed by the maximum values of transmission power, the electronic device 101 may identify whether to change the transmission power based only on the difference between reception strengths for N seconds after the transmission antenna change. When the transmission antenna change is performed by the maximum values of transmission power, it is relatively highly likely that back-off is to be performed at a relatively close future time point. Thus, the possibility of a transmission antenna change may be further reduced by considering only the difference between reception strengths.

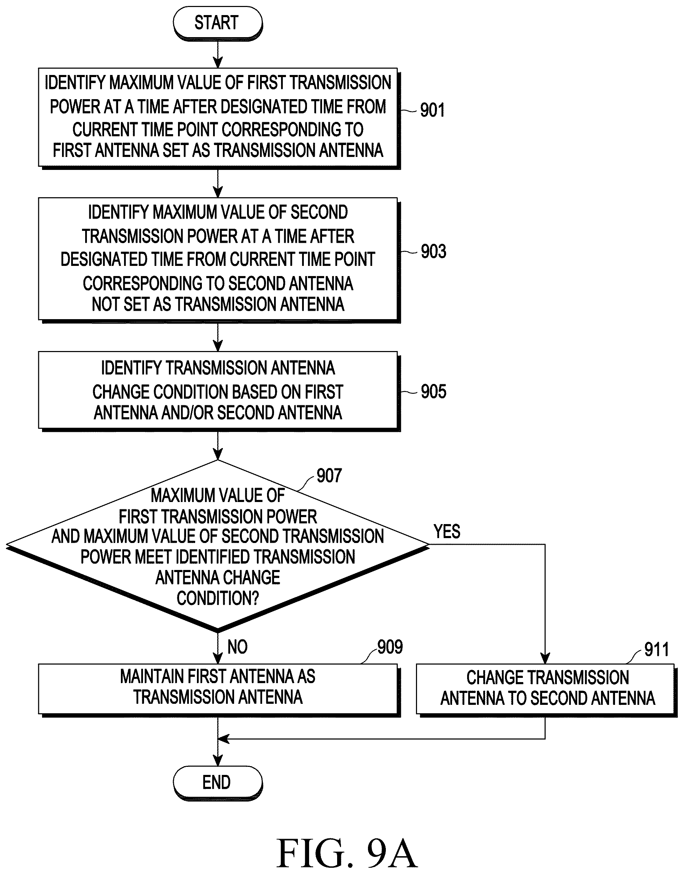

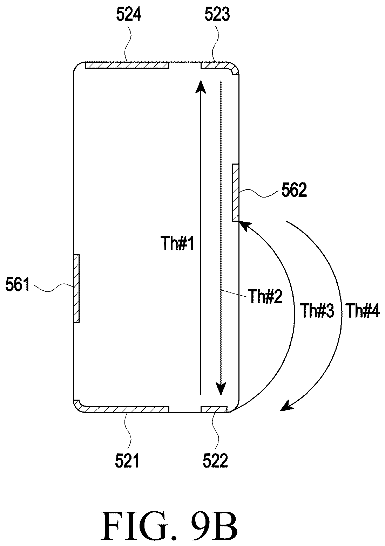

FIG. 9A is a flowchart illustrating an operation method of an electronic device according to an embodiment. The embodiment of FIG. 9A is described with reference to FIG. 9B. FIG. 9B is a view illustrating conditions for changing a transmission antenna according to an embodiment.

According to an embodiment, in operation 901, the electronic device 101 (e.g., the communication processor 501) may identify the maximum value of the first transmission power at a time point after a designated time from the current time point corresponding to the first antenna set as the transmission antenna. In operation 903, the electronic device 101 may identify the maximum value of the second transmission power at a time point after a designated time from the current time point corresponding to the second antenna not set as the transmission antenna. In operation 905, the electronic device 101 may identify a transmission antenna change condition, based on the first antenna and/or the second antenna. For example, the electronic device 101 may identify the transmission antenna change condition based on an antenna currently set as the transmission antenna and/or an antenna not set as the transmission antenna.

For example, referring to FIG. 9B, when the transmission antenna is changed from the antenna 522 to the antenna 523, a first threshold Th#1 may be used. In this case, the electronic device 101 may identify whether the difference between the maximum values of the transmission power exceeds the first threshold Th#1 as the condition for changing from the antenna 522 to the antenna 523. For example, when the transmission antenna is changed from the antenna 523 to the antenna 522, a second threshold Th#2 may be used. In this case, the electronic device 101 may identify whether the difference between the maximum values of the transmission power exceeds the second threshold Th#2 as the condition for changing from the antenna 523 to the antenna 522. If the first threshold Th#1 is smaller than the second threshold Th#2, the possibility of changing from the antenna 522 to the antenna 523 may be lower than the possibility of changing from the antenna 523 to the antenna 522. Accordingly, the antenna 522 may be more likely to be used as the transmission antenna. For example, when the transmission antenna is changed from the antenna 522 to the antenna 562, a third threshold Th#3 may be used. In this case, the electronic device 101 may identify whether the difference between the maximum values of the transmission power exceeds the third threshold Th#3 as the condition for changing from the antenna 522 to the antenna 526. For example, when the transmission antenna is changed from the antenna 562 to the antenna 522, a fourth threshold Th#4 may be used. In this case, the electronic device 101 may identify whether the difference between the maximum values of the transmission power exceeds the fourth threshold Th#4 as the condition for changing from the antenna 562 to the antenna 522. If the third threshold Th#3 is smaller than the fourth threshold Th#4, the possibility of changing from the antenna 522 to the antenna 562 may be lower than the possibility of changing from the antenna 562 to the antenna 522. Accordingly, the antenna 522 may be more likely to be used as the transmission antenna. As described above, the set change condition may be identified based on an antenna currently set as the transmission antenna and/or an antenna not set as the transmission antenna. In operation 907, the electronic device 101 may identify whether the maximum value of the first transmission power and the maximum value of the second transmission power meet the identified transmission antenna change condition. When the identified transmission antenna change condition is not met (No in 907), the electronic device 101 may maintain the transmission antenna as the first antenna in operation 909. When the identified transmission antenna change condition is met (Yes in 907), the electronic device 101 may change the transmission antenna to the second antenna in operation 911. As described above, the possibility of using a specific antenna as a transmission antenna may be set to be relatively high..

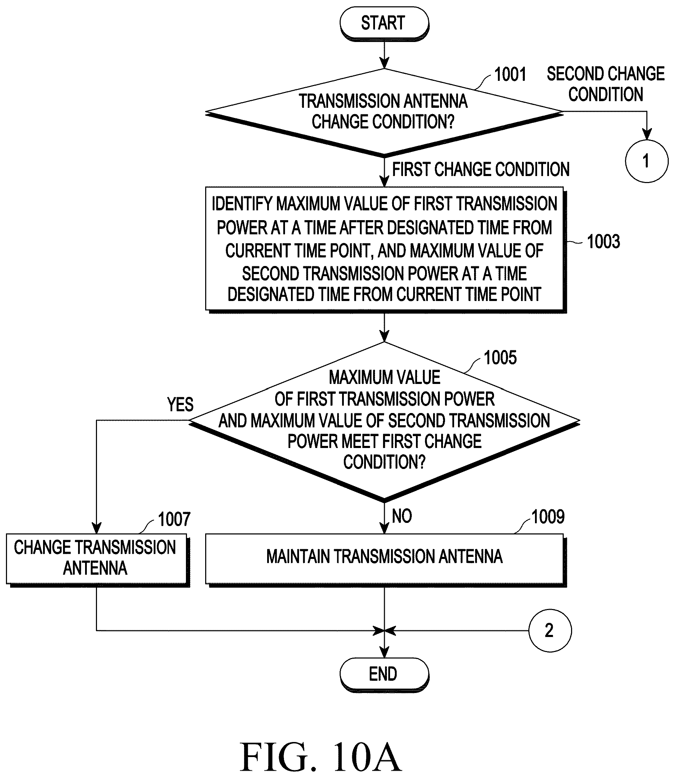

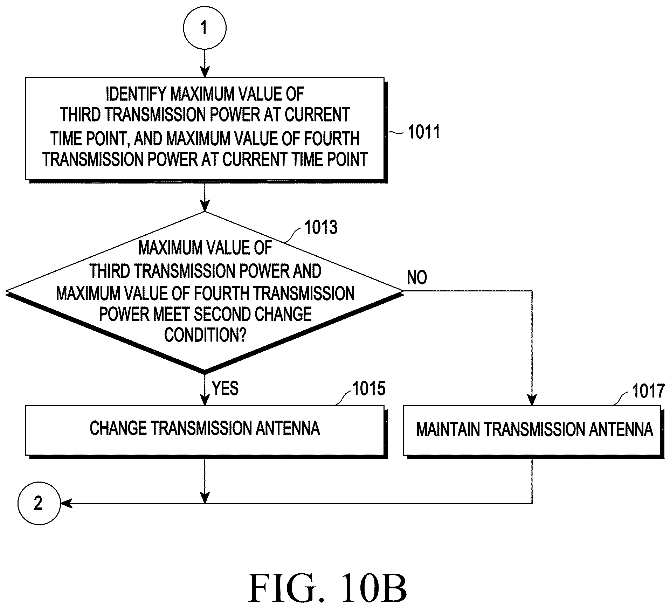

FIGS. 10A and 10B are flowcharts illustrating a method for operating an electronic device according to an embodiment.

According to an embodiment, the electronic device 101 (e.g., the communication processor 501) may identify whether the transmission antenna change condition is a first change condition or a second change condition in operation 1001. When the transmission antenna change condition is identified as the first change condition, in operation 1003, the electronic device 101 may identify the maximum value of the first transmission power at a time point after a designated time from the current time point and the maximum value of the second transmission power at the time point after the designated time from the current time point. In operation 1005, the electronic device 101 may identify whether the maximum value of the first transmission power and the maximum value of the second transmission power meet the first change condition. As described above, the first change condition may be a condition for determining whether to change based on the maximum value of the first transmission power at the time point after the designated time from the current time point and the maximum value of the second transmission power at the time point after the designated time from the current time point. When the transmission antenna change condition is met (Yes in 1005), the electronic device 101 may change the transmission antenna in operation 1007. When the transmission antenna change condition is not met (No in operation 1005), the electronic device 101 may maintain the transmission antenna in operation 1009.

When the transmission antenna change condition is the second change condition, the electronic device 101 may identify the maximum value of the third transmission power at the current time point and the maximum value of the fourth transmission power at the current time point in operation 1011. In operation 1013, the electronic device 101 may identify whether the maximum value of the third transmission power and the maximum value of the fourth transmission power meet the second change condition. As described above, the first change condition may be a condition for determining whether to change based on the maximum value of the third transmission power corresponding to the current time point and the maximum value of the fourth transmission power corresponding to the current time point. When the transmission antenna change condition is met (Yes in 1013), the electronic device 101 may change the transmission antenna in operation 1015. When the transmission antenna change condition is not met (No in operation 1013), the electronic device 101 may maintain the transmission antenna in operation 1017.

As described above, when the transmission antenna change condition is the first change condition, the electronic device 101 may determine whether to change the transmission antenna based on the maximum values of transmission power after the designated time from the current time point and, when the transmission antenna change condition is the second change condition, the electronic device 101 may determine whether to change the transmission antenna based on the maximum values of transmission power at the current time point. As described above, the possibility of changing the transmission antenna when the first change condition is applied may be lower than the possibility of changing the transmission antenna when the second change condition is applied. Accordingly, the first change condition may be applied in a situation where it is advantageous to use the current transmission antenna for a relatively long time, and the second change condition may be applied in a situation where it is advantageous to use the current transmission antenna for a relatively short time.

In one example, the electronic device 101 may select the transmission antenna change condition as either the first change condition or the second change condition, based on the current transmission antenna and/or the antenna which is not set as the transmission antenna. For example, the electronic device 101 may use the first change condition for an antenna (e.g., the antennas 521 and 522 in FIG. 5B) disposed at the lower end of the electronic device 101. The electronic device 101 may use the second change condition for an antenna (e.g., the antennas 523 and 524 in FIG. 5B) disposed at the upper end of the electronic device 101. For example, when the performance of the antenna disposed at the lower end is superior to the performance of the antenna disposed at the upper end, the electronic device 101 may use the first change condition for the antenna (e.g., the antennas 521 and 522 in FIG. 5B) disposed at the lower end of the electronic device 101. For example, the electronic device 101 may use the first change condition for an antenna having a Plimit greater than or equal to a threshold Plimit, and may use the second change condition for an antenna having a Plimit less than the threshold Plimit. For example, the communication processor 501 may determine a transmission antenna change condition based on information provided from an application processor (e.g., the processor 120). For example, when the form factor of the electronic device 101 is changeable, if the current form factor of the electronic device 101 is a specific form factor (which may be, e.g., be in a folded state, but is not limited thereto), the first change condition may be used. For example, the electronic device 101 may identify the transmission antenna change condition based on the frequency band used. For example, the first change condition may be used when the frequency band used is a mid-band or a high-band, and the second change condition may be used when the frequency band used is a low-band.

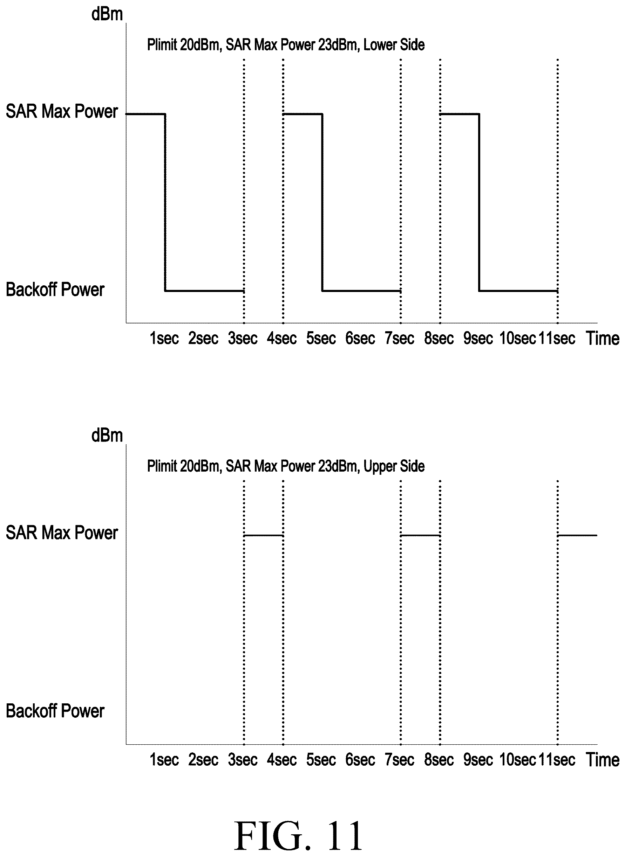

FIG. 11 is a view illustrating a maximum value of transmission power when different transmission antenna change conditions are used for two antennas according to an embodiment.

In the embodiment of FIG. 11, e.g., the first change condition described with reference to FIGS. 10A and 10B may be used for the antenna disposed on the lower side, and the second change condition described with reference to FIGS. 10A and 10B may be used for the antenna disposed on the upper side. When the transmission antenna change condition is the first change condition, it may be determined whether to change the transmission antenna based on the maximum values of transmission power after the designated time (e.g., 1 second) from the current time point and, when the transmission antenna change condition is the second change condition, it may be determined whether to change the transmission antenna based on the maximum values of transmission power at the current time point. For the lower antenna, whether to change the transmission antenna may be determined based on maximum values of transmission power at the time point after the designated time (e.g., 1 second) from the current time point, and as described with reference to FIG. 6D, a transmission antenna change may be performed after 3 seconds. Meanwhile, when the transmission antenna is changed to the upper antenna, whether to change the transmission antenna may be determined for the upper antenna based on the maximum values of transmission power at the current time point. Accordingly, for the upper antenna, a transmission antenna change may be performed after 1 second. As described above, the time for using the lower antenna may be longer than the time for using the upper antenna.

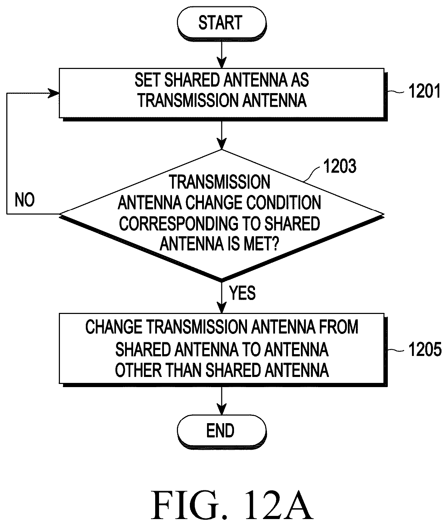

FIG. 12A is a flowchart illustrating an operation method of an electronic device according to an embodiment.

According to an embodiment, in operation 1201, the electronic device 101 (e.g., the communication processor 501) may set a shared antenna (e.g., the antenna 562 in FIG. 5B) as a transmission antenna. For example, the shared antenna for IEEE 802.11 (or Wi-Fi) and/or Bluetooth communication may be used, but the communication type is not limited. In operation 1203, the electronic device 101 may identify whether a transmission antenna change condition corresponding to the shared antenna is met. For example, the transmission antenna change condition corresponding to the shared antenna may be whether a value obtained by dividing the remaining SAR margin of the timetable by the remaining time is less than or equal to a threshold. For example, the transmission antenna change condition corresponding to the shared antenna may be whether the transmission antenna change from the shared antenna to another antenna is supported. For example, the transmission antenna change condition corresponding to the shared antenna may be whether the current transmission power is greater than the Plimit. When the Plimit is relatively large, it is less likely that the back-off will be performed even when the transmission power is continuously applied at the maximum value. If the Plimit in free space (Free Plimit) is relatively large as 23 dBm, and the Plimit in the gripped state (grip Plimit) is relatively low as 17 dBm, the electronic device 101 may be configured to perform a transmission antenna change in the gripped state and not to perform a transmission antenna change in the free space. If the transmission antenna change condition corresponding to the shared antenna is met (Yes in 1203), the electronic device 101 may change the transmission antenna from the shared antenna to another antenna other than the shared antenna in operation 1205. In one example, the electronic device 101 may change the default antenna of Wi-Fi and/or Bluetooth from the shared antenna to an antenna other than the shared antenna. When an RF signal is transmitted through the shared antenna, the RF exposure may increase in all antenna groups sharing the shared antenna. Meanwhile, as described above, as the use of the shared antenna is stopped, the RF exposure in the plurality of antenna groups may be prevented from increasing.

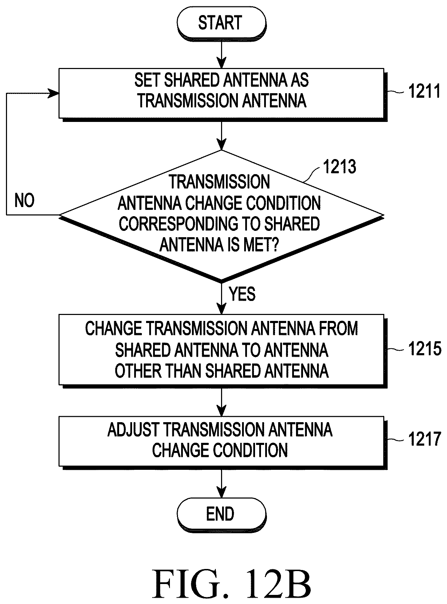

FIG. 12B is a flowchart illustrating an operation method of an electronic device according to an embodiment.

According to an embodiment, in operation 1211, the electronic device 101 (e.g., the communication processor 501) may set a shared antenna (e.g., the antenna 562 in FIG. 5B) as a transmission antenna. In operation 1213, the electronic device 101 may identify whether a transmission antenna change condition corresponding to the shared antenna is met. Since the transmission antenna change condition corresponding to the shared antenna has been described with reference to FIG. 12A, the description is not repeated herein. If the transmission antenna change condition corresponding to the shared antenna is met (Yes in 1213), the electronic device 101 may change the transmission antenna from the shared antenna to another antenna other than the shared antenna in operation 1215. In operation 1217, the electronic device 101 may adjust the transmission antenna change condition. For example, a difference threshold included in the transmission antenna change condition used while the transmission antenna is the shared antenna may be set to a first value, and a difference threshold included in the transmission antenna change condition used while the transmission antenna is an antenna other than the shared antenna may be set to a second value. For example, when the shared antenna is the transmission antenna, the difference threshold may be -0.5 to 0 dB. For example, when electric fields for the shared antenna and the other antenna are similar, the use of the shared antenna may be prevented. For example, when the antenna other than the shared antenna is the transmission antenna, the difference threshold may be set to 5 to 7 dB. Accordingly, it may be relatively less likely that the transmission antenna is changed from the other antenna to the shared antenna.

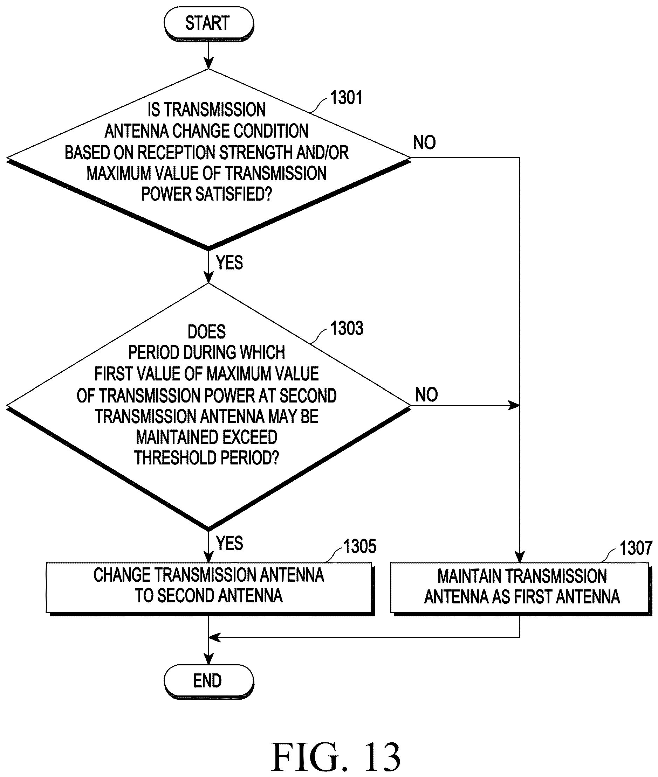

FIG. 13 is a view illustrating an operation method of an electronic device according to an embodiment.

According to an embodiment, in operation 1301, an electronic device 101 may identify whether a transmission antenna change condition based on reception strength and/or a maximum value of transmission power from the first antenna to the second antenna is satisfied. In one example, the transmission antenna change condition may be, for example as in Equation 5, whether a sum of a difference between reception strengths corresponding to each of the antennas (e.g., a value obtained by subtracting the first reception strength from the second reception strength) and a difference between maximum values of transmission power corresponding to a current time point corresponding to each of the antennas (e.g., a value obtained by subtracting the maximum value of the first transmission power from the maximum value of the second transmission power) exceeds a threshold (e.g., the second difference threshold in Equation 5), but there is no limitation. Alternatively, the transmission antenna change condition may be, as in Equation 4, whether a difference between maximum values of transmission power corresponding to the current time point corresponding to each of the antennas (e.g., a value obtained by subtracting the maximum value of the first transmission power from the maximum value of the second transmission power) exceeds a threshold (e.g., the first difference threshold in Equation 4), but there is no limitation. Alternatively, the transmission antenna change condition may be, as in Equation 6, whether a difference between reception strengths corresponding to each of the antennas (e.g., a value obtained by subtracting the first reception strength from the second reception strength) exceeds a threshold (e.g., the third difference threshold in Equation 6), but there is no limitation.

When the transmission antenna change condition based on reception strength and/or the maximum value of transmission power is satisfied (operation 1301-Yes), the electronic device 101 may, in operation 1303, identify whether a period during which a first value of the maximum transmission power at the second transmission antenna may be maintained exceeds a threshold period. The first value here may mean a value of the maximum value of transmission power that is not backed off. For example, the electronic device 101 may identify whether a period during which back-off is not performed on the maximum value of transmission power exceeds the threshold period. For example, in operation 1303, a condition for identifying whether the period during which the first value of the maximum transmission power at the second transmission antenna may be maintained exceeds the threshold period may be as in Equation 7.

remaining SAR margin>[A X SAR consumption per unit time corresponding to maximum value of transmission power]+[remaining time-A] X [SAR consumption per unit time corresponding to maximum value of backed-off transmission power]     [Equation 7]

In Equation 7, the remaining SAR margin may be, e.g., a value obtained by subtracting a cumulative value of SAR consumed at at least one past time point from an SAR threshold corresponding to a time window. A may be the threshold period and may be, e.g., 100ms but there is no limitation. For example, considering gain only from a downlink throughput perspective, 60ms may also be possible, and those skilled in the art will understand that there is no limitation on the value. The SAR consumed per unit time corresponding to the maximum value of transmission power may be, e.g., an SAR value generated per unit time when radiating an RF signal at the maximum value of transmission power at the second antenna. The SAR consumed per unit time corresponding to the backed-off maximum value of transmission power may be, e.g., an SAR value generated per unit time when radiating an RF signal at the backed-off maximum value of transmission power at the second antenna. The remaining time may be, e.g., a value obtained by subtracting at least one past time point from the time window. For example, satisfaction of Equation 7 may mean that the remaining SAR margin is greater than the sum of the SAR corresponding to the maximum value of transmission power that is not backed off during A and the SAR corresponding to the backed-off maximum value of transmission power during (remaining time - A). This may mean that the electronic device 101 may not back off the maximum value of transmission power for a period exceeding A.

When it is identified that the period during which the maximum value of transmission power at the second transmission antenna may maintain the first value (e.g., a value that is not backed off) exceeds the threshold period (operation 1303-Yes), the electronic device 101 may, in operation 1305, change the transmission antenna from the first antenna to the second antenna. When it is identified that the period during which the maximum value of transmission power at the second transmission antenna may maintain the first value (e.g., a value that is not backed off) does not exceed the threshold period (operation 1303-No), the electronic device 101 may, in operation 1307, maintain the transmission antenna as the first antenna. If the transmission antenna change condition based on reception strength and/or the maximum value of transmission power in operation 1301 is not satisfied (operation 1301-No), the electronic device 101 may, in operation 1307, maintain the transmission antenna as the first antenna. As described above, the electronic device 101 may perform transmission antenna change (or switching) when a period during which the maximum value of transmission power is maintained without being backed off is expected to exceed the threshold period (e.g., A in Equation 7).

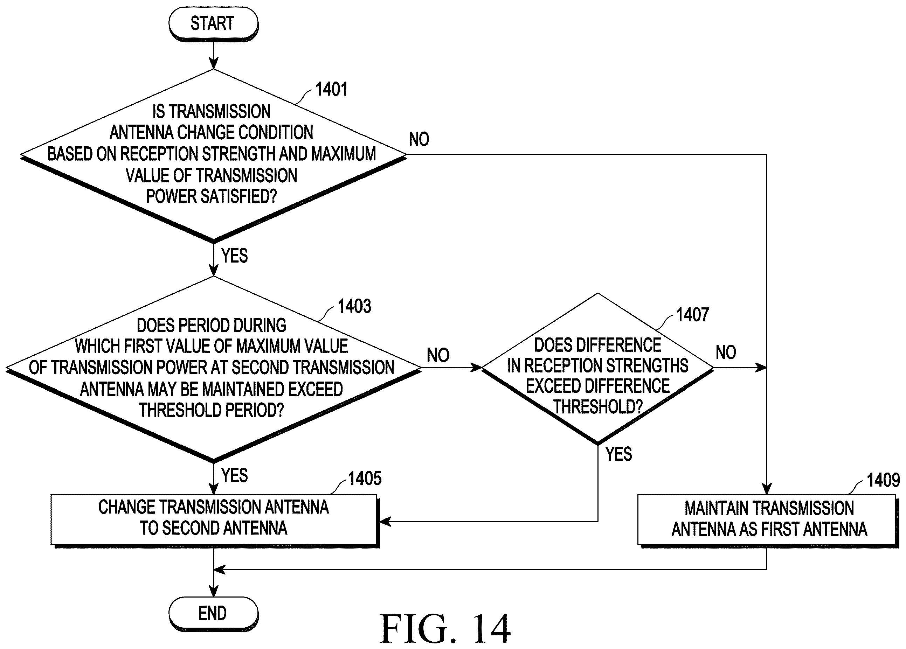

FIG. 14 is a view illustrating an operation method of an electronic device according to an embodiment.

According to an embodiment, in operation 1401, an electronic device 101 may identify whether a transmission antenna change condition based on reception strength and a maximum value of transmission power is satisfied. For example, in an example, the transmission antenna change condition may be, for example as in Equation 5, whether a sum of a difference between reception strengths corresponding to each of the antennas (e.g., a value obtained by subtracting the first reception strength from the second reception strength) and a difference between maximum values of transmission power corresponding to the current time point corresponding to each of the antennas (e.g., a value obtained by subtracting the maximum value of the first transmission power from the maximum value of the second transmission power) exceeds a threshold (e.g., the second difference threshold in Equation 5), but there is no limitation. When it is identified that the transmission antenna change condition based on reception strength and the maximum value of transmission power is satisfied (operation 1401-Yes), the electronic device 101 may, in operation 1403, identify whether a period during which the first value of the maximum value of transmission power at the second transmission antenna (e.g., which may be the maximum value of transmission power that is not backed off) may be maintained exceeds the threshold period. The electronic device 101 may identify whether the period during which the first value of the maximum value of transmission power at the second transmission antenna may be maintained exceeds the threshold period based on whether a condition such as Equation 7 is satisfied, but there is no limitation. If it is identified that the period during which the first value of the maximum value of transmission power at the second transmission antenna may be maintained exceeds the threshold period (operation 1403-Yes), the electronic device 101 may, in operation 1405, change the transmission antenna to the second antenna. If it is identified that the period during which the first value of the maximum value of transmission power at the second transmission antenna may be maintained does not exceed the threshold period (operation 1403-No), the electronic device 101 may, in operation 1407, identify whether the difference in reception strengths exceeds a difference threshold. For example, the electronic device 101 may identify, as in Equation 6, whether a difference between reception strengths corresponding to each of the antennas (e.g., a value obtained by subtracting the first reception strength from the second reception strength) exceeds a threshold (e.g., the third difference threshold in Equation 6) as whether the difference in reception strengths exceeds the difference threshold, but there is no limitation. If it is identified that the difference in reception strengths exceeds the difference threshold (operation 1407-Yes), the electronic device 101 may, in operation 1405, change the transmission antenna to the second antenna. If it is identified that the difference in reception strengths does not exceed the difference threshold (operation 1407-No), the electronic device 101 may, in operation 1409, maintain the transmission antenna as the first antenna. Alternatively, if it is identified that the transmission antenna change condition based on reception strength and the maximum value of transmission power is not satisfied (operation 1401-No), the electronic device 101 may, in operation 1409, maintain the transmission antenna as the first antenna. Meanwhile, those skilled in the art will understand that there is no limitation on the timing (or execution condition) when operation 1407 is performed. For example, the electronic device 101 may be configured to change the transmission antenna from the first antenna to the second antenna independently of whether at least some of the other conditions are satisfied, if it is identified that the difference in reception strengths exceeds the difference threshold.

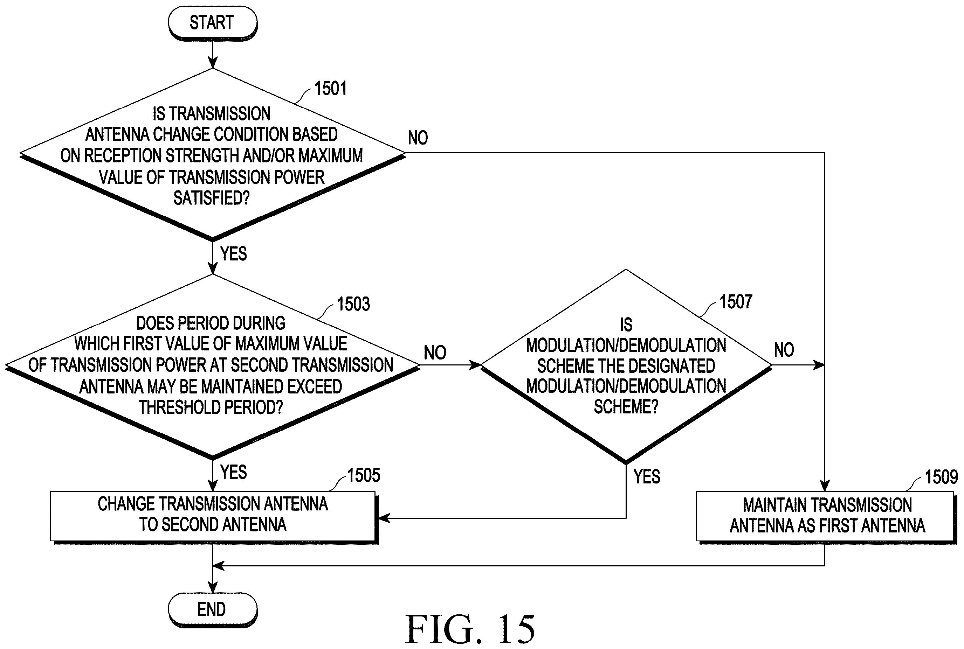

FIG. 15 is a view illustrating an operation method of an electronic device according to an embodiment.

According to an embodiment, in operation 1501, an electronic device 101 may identify whether a transmission antenna change condition based on reception strength and/or a maximum value of transmission power is satisfied. For example, the electronic device 101 may identify whether the transmission antenna change condition based on reception strength and/or the maximum value of transmission power is satisfied as in Equation 4, Equation 5, or Equation 6, but there is no limitation. When it is identified that the transmission antenna change condition based on reception strength and/or the maximum value of transmission power is satisfied (operation 1501-Yes), the electronic device 101 may, in operation 1503, identify whether a period during which the first value of the maximum value of transmission power at the second transmission antenna (e.g., which may be the maximum value of transmission power that is not backed off) may be maintained exceeds the threshold period. The electronic device 101 may identify whether the period during which the first value of the maximum value of transmission power at the second transmission antenna may be maintained exceeds the threshold period based on whether a condition such as Equation 7 is satisfied, but there is no limitation. If it is identified that the period during which the first value of the maximum value of transmission power at the second transmission antenna may be maintained exceeds the threshold period (operation 1503-Yes), the electronic device 101 may, in operation 1505, change the transmission antenna to the second antenna. If it is identified that the period during which the first value of the maximum value of transmission power at the second transmission antenna may be maintained does not exceed the threshold period (operation 1503-No), the electronic device 101 may, in operation 1507, identify whether a modulation/demodulation scheme is a designated modulation/demodulation scheme. For example, the designated modulation/demodulation scheme may be a modulation/demodulation scheme that may maintain a block error rate (BLER) above a threshold BLER even when transmission power is backed off, e.g., quadrature phase shift keying (QPSK) and/or binary phase shift keying (BPSK), but there is no limitation. If it is identified that the modulation/demodulation scheme is the designated modulation/demodulation scheme (operation 1507-Yes), the electronic device 101 may, in operation 1505, change the transmission antenna to the second antenna. If it is identified that the modulation/demodulation scheme is not the designated modulation/demodulation scheme (operation 1507-No), the electronic device 101 may, in operation 1509, maintain the transmission antenna as the first antenna. Alternatively, if it is identified that the transmission antenna change condition based on reception strength and the maximum value of transmission power is not satisfied (operation 1501-No), the electronic device 101 may, in operation 1509, maintain the transmission antenna as the first antenna. Meanwhile, those skilled in the art will understand that there is no limitation on the timing (or execution condition) when operation 1507 is performed. For example, the electronic device 101 may be configured to change the transmission antenna from the first antenna to the second antenna independently of whether at least some of the other conditions are satisfied, if it is identified that the modulation/demodulation scheme is the designated modulation/demodulation scheme.

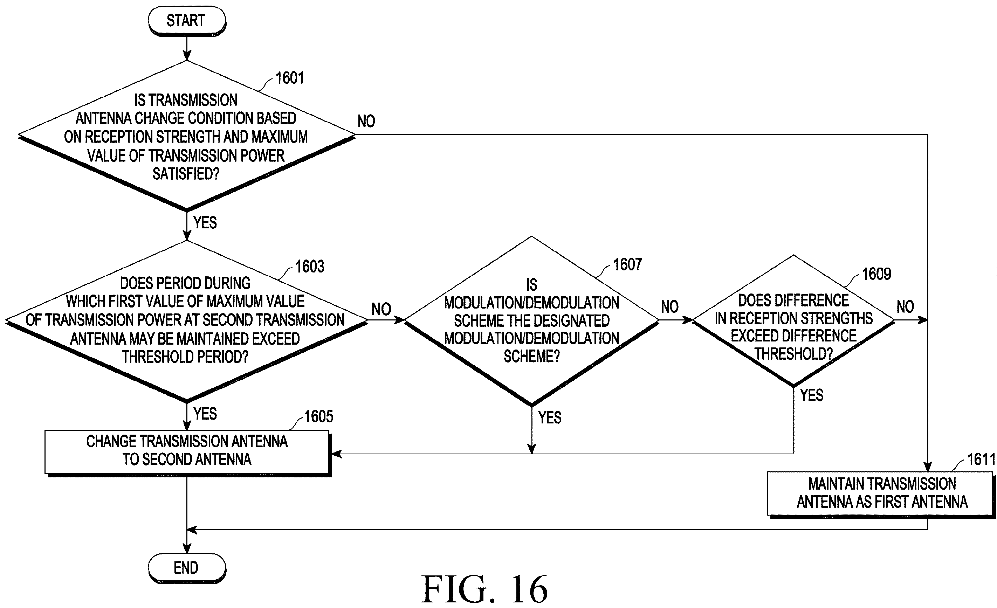

FIG. 16 is a view illustrating an operation method of an electronic device according to an embodiment.

According to an embodiment, in operation 1601, an electronic device 101 may identify whether a transmission antenna change condition based on reception strength and a maximum value of transmission power is satisfied. For example, the electronic device 101 may identify whether the transmission antenna change condition based on reception strength and the maximum value of transmission power is satisfied as in Equation 5, but there is no limitation. When it is identified that the transmission antenna change condition based on reception strength and the maximum value of transmission power is satisfied (operation 1601-Yes), the electronic device 101 may, in operation 1603, identify whether a period during which the first value of the maximum value of transmission power at the second transmission antenna (e.g., which may be the maximum value of transmission power that is not backed off) may be maintained exceeds the threshold period. The electronic device 101 may identify whether the period during which the first value of the maximum value of transmission power at the second transmission antenna may be maintained exceeds the threshold period based on whether a condition such as Equation 7 is satisfied, but there is no limitation. If it is identified that the period during which the first value of the maximum value of transmission power at the second transmission antenna may be maintained exceeds the threshold period (operation 1603-Yes), the electronic device 101 may, in operation 1605, change the transmission antenna to the second antenna. If it is identified that the period during which the first value of the maximum value of transmission power at the second transmission antenna may be maintained does not exceed the threshold period (operation 1603-No), the electronic device 101 may, in operation 1607, identify whether a modulation/demodulation scheme is a designated modulation/demodulation scheme. As described above, the designated modulation/demodulation scheme may be a modulation/demodulation scheme that may maintain the BLER above the threshold BLER even when transmission power is backed off, but there is no limitation. If it is identified that the modulation/demodulation scheme is the designated modulation/demodulation scheme (operation 1607-Yes), the electronic device 101 may, in operation 1605, change the transmission antenna to the second antenna. If it is identified that the modulation/demodulation scheme is not the designated modulation/demodulation scheme (operation 1607-No), the electronic device 101 may, in operation 1609, identify whether the difference in reception strengths exceeds a difference threshold. For example, the electronic device 101 may identify, as in Equation 6, whether a difference between reception strengths corresponding to each of the antennas (e.g., a value obtained by subtracting the first reception strength from the second reception strength) exceeds a threshold (e.g., the third difference threshold in Equation 6) as whether the difference in reception strengths exceeds the difference threshold, but there is no limitation. If it is identified that the difference in reception strengths exceeds the difference threshold (operation 1609-Yes), the electronic device 101 may, in operation 1605, change the transmission antenna to the second antenna. If it is identified that the difference in reception strengths does not exceed the difference threshold (operation 1609-No), the electronic device 101 may, in operation 1611, maintain the transmission antenna as the first antenna. Meanwhile, those skilled in the art will understand that there is no limitation on the timing (or execution condition) when operations 1607 and 1609 are performed. For example, the electronic device 101 may be configured to change the transmission antenna from the first antenna to the second antenna independently of whether at least some of the other conditions are satisfied, if it is identified that the modulation/demodulation scheme is the designated modulation/demodulation scheme and/or if it is identified that the difference in reception strengths exceeds the difference threshold.

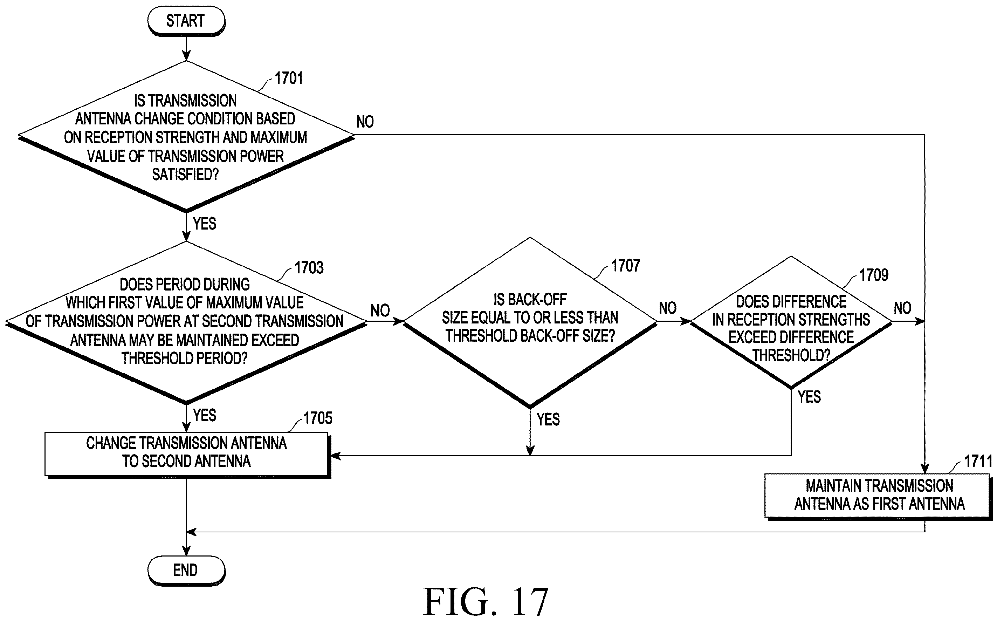

FIG. 17 is a view illustrating an operation method of an electronic device according to an embodiment.

According to an embodiment, in operation 1701, an electronic device 101 may identify whether a transmission antenna change condition based on reception strength and a maximum value of transmission power is satisfied. For example, the electronic device 101 may identify whether the transmission antenna change condition based on reception strength and the maximum value of transmission power is satisfied as in Equation 5, but there is no limitation. When it is identified that the transmission antenna change condition based on reception strength and the maximum value of transmission power is satisfied (operation 1701-Yes), the electronic device 101 may, in operation 1703, identify whether a period during which the first value of the maximum value of transmission power at the second transmission antenna (e.g., which may be the maximum value of transmission power that is not backed off) may be maintained exceeds the threshold period. The electronic device 101 may identify whether the period during which the first value of the maximum value of transmission power at the second transmission antenna may be maintained exceeds the threshold period based on whether a condition such as Equation 7 is satisfied, but there is no limitation. If it is identified that the period during which the first value of the maximum value of transmission power at the second transmission antenna may be maintained exceeds the threshold period (operation 1703-Yes), the electronic device 101 may, in operation 1705, change the transmission antenna to the second antenna. If it is identified that the period during which the first value of the maximum value of transmission power at the second transmission antenna may be maintained does not exceed the threshold period (operation 1703-No), the electronic device 101 may, in operation 1707, identify whether a back-off size of the maximum value of transmission power for the second antenna is equal to or less than a threshold back-off size (e.g., may be 5dB but there is no limitation). Even when the period during which the maximum transmission power is not backed off is equal to or less than the threshold period, when the back-off size is smaller than the threshold back-off size, the transmission antenna may be changed. If it is identified that the back-off size is equal to or less than the threshold size (operation 1707-Yes), the electronic device 101 may, in operation 1705, change the transmission antenna to the second antenna. If it is identified that the back-off size is not equal to or less than the threshold size (operation 1707-No), the electronic device 101 may, in operation 1709, identify whether the difference in reception strengths exceeds the difference threshold. For example, the electronic device 101 may identify, as in Equation 6, whether a difference between reception strengths corresponding to each of the antennas (e.g., a value obtained by subtracting the first reception strength from the second reception strength) exceeds a threshold (e.g., the third difference threshold in Equation 6) as whether the difference in reception strengths exceeds the difference threshold, but there is no limitation. If it is identified that the difference in reception strengths exceeds the difference threshold (operation 1709-Yes), the electronic device 101 may, in operation 1705, change the transmission antenna to the second antenna. If it is identified that the difference in reception strengths does not exceed the difference threshold (operation 1709-No), the electronic device 101 may, in operation 1711, maintain the transmission antenna as the first antenna. Meanwhile, those skilled in the art will understand that there is no limitation on the timing (or execution condition) when operations 1707 and 1709 are performed. For example, the electronic device 101 may be configured to change the transmission antenna from the first antenna to the second antenna independently of whether at least some of the other conditions are satisfied, if it is identified that the back-off size is equal to or less than the threshold back-off size and/or if it is identified that the difference in reception strengths exceeds the difference threshold.

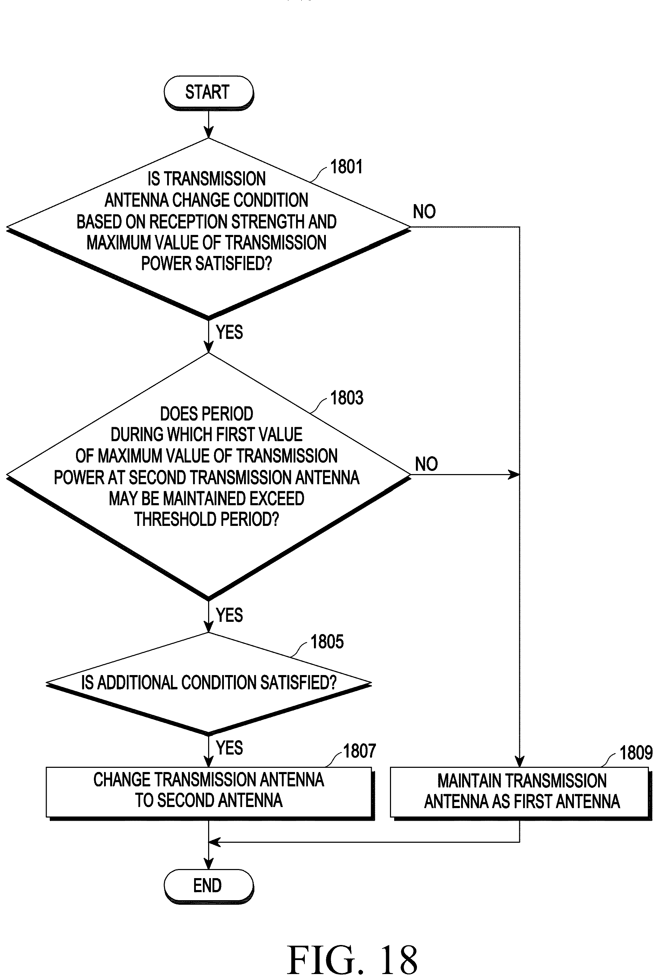

FIG. 18 is a view illustrating an operation method of an electronic device according to an embodiment.

According to an embodiment, in operation 1801, an electronic device 101 may identify whether a transmission antenna change condition based on reception strength and a maximum value of transmission power is satisfied. For example, the electronic device 101 may identify whether the transmission antenna change condition based on reception strength and the maximum value of transmission power is satisfied as in Equation 5, but there is no limitation. When it is identified that the transmission antenna change condition based on reception strength and the maximum value of transmission power is satisfied (operation 1801-Yes), the electronic device 101 may, in operation 1803, identify whether a period during which the first value of the maximum value of transmission power at the second transmission antenna (e.g., which may be the maximum value of transmission power that is not backed off) may be maintained exceeds the threshold period. The electronic device 101 may identify whether the period during which the first value of the maximum value of transmission power at the second transmission antenna may be maintained exceeds the threshold period based on whether a condition such as Equation 7 is satisfied, but there is no limitation. If it is identified that the period during which the first value of the maximum value of transmission power at the second transmission antenna may be maintained exceeds the threshold period (operation 1803-Yes), the electronic device 101 may identify whether at least one additional condition is satisfied. For example, the additional condition may be a condition that a modulation/demodulation scheme is a designated modulation/demodulation scheme. For example, the designated modulation/demodulation scheme may be a modulation/demodulation scheme that may maintain the BLER above the threshold BLER even when transmission power is backed off, e.g., at least one of 16QAM, QPSK, and/or BPSK, but there is no limitation. For example, the additional condition may be a condition that the difference in reception strengths exceeds the difference threshold. For example, the electronic device 101 may identify, as in Equation 6, whether a difference between reception strengths corresponding to each of the antennas (e.g., a value obtained by subtracting the first reception strength from the second reception strength) exceeds a threshold (e.g., the third difference threshold in Equation 6) as whether the difference in reception strengths exceeds the difference threshold, but there is no limitation. For example, the additional condition may be a condition that the back-off size is equal to or less than the threshold back-off size (e.g., 5dB). When at least one additional condition is satisfied (operation 1805-Yes), the electronic device 101 may, in operation 1807, change the transmission antenna to the second antenna. When the transmission antenna change condition based on reception strength and/or the maximum value of transmission power is not satisfied (operation 1801-No), when the period during which the first value of the maximum value of transmission power at the second transmission antenna may be maintained does not exceed the threshold period (operation 1803-No), or when the additional condition is not satisfied (operation 1805-No), the electronic device 101 may, in operation 1809, maintain the transmission antenna as the first antenna.

An electronic device 101 may include a plurality of antennas including a first antenna 521 and a second antenna 522.

The electronic device 101 may include at least one processor 120; 212,214; 260; 501.

The electronic device 101 may include memory 130 storing instructions.

The instructions may, when executed by the at least one processor 120; 212,214; 260; 501, cause the electronic device 101, based on the first antenna 521 being set as a transmission antenna, while the electronic device 101 performs communication using the first antenna 521 of the electronic device 101, to identify that a first condition for changing the transmission antenna is satisfied, based on a reception strength difference between a first reception strength associated with the first antenna 521 and a second reception strength associated with the second antenna 522, and/or a transmission power maximum value difference between a maximum value of a first transmission power associated with the first antenna 521 and a maximum value of a second transmission power associated with the second antenna 522.

The instructions may, when executed by the at least one processor 120; 212,214; 260; 501, cause the electronic device 101, based on satisfaction of the first condition, to identify whether a second condition is satisfied, the second condition being that a period during which back-off is not performed on the maximum value of the transmission power associated with the second antenna 522 exceeds a threshold period.

The instructions may, when executed by the at least one processor 120; 212,214; 260; 501, cause the electronic device 101, based on the second condition being satisfied, to change the transmission antenna from the first antenna 521 to the second antenna 522.

The instructions may, when executed by the at least one processor 120; 212,214; 260; 501, cause the electronic device 101, based on the second condition not being satisfied, to maintain the transmission antenna as the first antenna 521.

The instructions may, when executed by the at least one processor 120; 212,214; 260; 501, cause the electronic device 101, based on the second condition not being satisfied, to change the transmission antenna from the first antenna 521 to the second antenna 522 based on a modulation/demodulation scheme of the electronic device 101 being a designated modulation/demodulation scheme, or to maintain the transmission antenna as the first antenna 521 based on the modulation/demodulation scheme of the electronic device 101 not being the designated modulation/demodulation scheme.

The instructions may, when executed by the at least one processor 120; 212,214; 260; 501, cause the electronic device 101, based on the second condition being satisfied, as at least part of changing the transmission antenna from the first antenna 521 to the second antenna 522, to change the transmission antenna from the first antenna 521 to the second antenna 522 based on identifying that the second condition is satisfied and identifying that a modulation/demodulation scheme of the electronic device 101 is a designated modulation/demodulation scheme.

The instructions may, when executed by the at least one processor 120; 212,214; 260; 501, cause the electronic device 101, based on the second condition not being satisfied, to change the transmission antenna from the first antenna 521 to the second antenna 522 based on the reception strength difference exceeding a difference threshold, or to maintain the transmission antenna as the first antenna 521 based on the reception strength difference not exceeding the difference threshold.

The instructions may, when executed by the at least one processor 120; 212,214; 260; 501, cause the electronic device 101 to change the transmission antenna from the first antenna 521 to the second antenna 522 based on identifying that the second condition is satisfied and identifying that the reception strength difference exceeds a difference threshold.

The instructions may, when executed by the at least one processor 120; 212,214; 260; 501, cause the electronic device 101, based on the second condition not being satisfied, to change the transmission antenna from the first antenna 521 to the second antenna 522 based on a back-off size corresponding to the second antenna 522 being equal to or less than a threshold back-off size, or to maintain the transmission antenna as the first antenna 521 based on the back-off size corresponding to the second antenna 522 not being equal to or less than the threshold back-off size.

The instructions may, when executed by the at least one processor 120; 212,214; 260; 501, cause the electronic device 101 to change the transmission antenna from the first antenna 521 to the second antenna 522 based on identifying that the second condition is satisfied and identifying that a back-off size corresponding to the second antenna 522 is equal to or less than a threshold back-off size.

The first condition may be a condition that a sum of the reception strength difference and the transmission power maximum value difference exceeds a threshold size.

The first condition may be a condition that the transmission power maximum value difference exceeds a threshold size.

A storage medium storing at least one computer-readable instruction may be provided.

The instructions may, when executed by the at least one processor 120; 212,214; 260; 501, cause the electronic device 101, based on the first antenna 521 being set as a transmission antenna, while the electronic device 101 performs communication using the first antenna 521 of the electronic device 101, to identify that a first condition for changing the transmission antenna is satisfied, based on a reception strength difference between a first reception strength associated with the first antenna 521 and a second reception strength associated with the second antenna 522, and/or a transmission power maximum value difference between a maximum value of a first transmission power associated with the first antenna 521 and a maximum value of a second transmission power associated with the second antenna 522.

The instructions may, when executed by the at least one processor 120; 212,214; 260; 501, cause the electronic device 101, based on satisfaction of the first condition, to identify whether a second condition is satisfied, the second condition being that a period during which back-off is not performed on the maximum value of the transmission power associated with the second antenna 522 exceeds a threshold period.

The instructions may, when executed by the at least one processor 120; 212,214; 260; 501, cause the electronic device 101, based on the second condition being satisfied, to change the transmission antenna from the first antenna 521 to the second antenna 522.

An operation method of an electronic device 101 including a first antenna 521 and a second antenna 522 may include, based on the first antenna 521 being set as a transmission antenna, while the electronic device 101 performs communication using the first antenna 521 of the electronic device 101, identifying that a first condition for changing the transmission antenna is satisfied, based on a reception strength difference between a first reception strength associated with the first antenna 521 and a second reception strength associated with the second antenna 522, and/or a transmission power maximum value difference between a maximum value of a first transmission power associated with the first antenna 521 and a maximum value of a second transmission power associated with the second antenna 522.

The operation method may include, based on satisfaction of the first condition, identifying whether a second condition is satisfied, the second condition being that a period during which back-off is not performed on the maximum value of the transmission power associated with the second antenna 522 exceeds a threshold period.

The operation method may include, based on the second condition being satisfied, changing the transmission antenna from the first antenna 521 to the second antenna 522.

According to an embodiment, there may be provided a computer-readable storage medium storing at least one instruction. The at least one instruction may, when executed by at least one processor 501 of an electronic device 101, enable the electronic device 101 to perform at least one operation. The at least one operation may comprise identifying a maximum value of first transmission power corresponding to a first antenna set as a transmission antenna of the electronic device 101, corresponding to one time point after at least one first time point, based on first RF exposure corresponding to at least one first past time point of a designated period set for the first antenna, second RF exposure corresponding to the at least one first time point after the at least one past time point, third RF exposure corresponding to at least one first future time point except for the at least one first past time point of the designated period, the at least one first time point, and one time point after the at least one first time point, and a threshold RF exposure allocated for the designated period. The at least one operation may comprise identifying a maximum value of second transmission power corresponding to a second antenna different from the first antenna of the electronic device 101, corresponding to one time point after at least one second time point, based on fourth RF exposure corresponding to at least one second past time point of a designated period set for the second antenna, fifth RF exposure corresponding to the at least one second time point after the at least one past time point, sixth RF exposure corresponding to at least one second future time point except for the at least one second past time point of the designated period, the at least one second time point, and one time point after the at least one second time point, and a threshold RF exposure allocated for the designated period. The at least one operation may comprise identifying whether to change the transmission antenna from the first antenna to the second antenna based on whether the maximum value of the first transmission power and the maximum value of the second transmission power meet a condition set for changing the antenna.

According to an embodiment, an electronic device 101 may comprise memory storing at least one instruction and a processor connected to the memory. The at least one instruction may, when executed by the processor, enable the electronic device 101 to perform at least one operation. The at least one operation may comprise identifying a maximum value of first transmission power corresponding to a first antenna set as a transmission antenna of the electronic device 101, corresponding to one time point after at least one first time point, based on first RF exposure corresponding to at least one first past time point of a designated period set for the first antenna, second RF exposure corresponding to the at least one first time point after the at least one past time point, third RF exposure corresponding to at least one first future time point except for the at least one first past time point of the designated period, the at least one first time point, and one time point after the at least one first time point, and a threshold RF exposure allocated for the designated period. The at least one operation may comprise identifying a maximum value of second transmission power corresponding to a second antenna different from the first antenna of the electronic device 101, corresponding to one time point after at least one second time point, based on fourth RF exposure corresponding to at least one second past time point of a designated period set for the second antenna, fifth RF exposure corresponding to the at least one second time point after the at least one past time point, sixth RF exposure corresponding to at least one second future time point except for the at least one second past time point of the designated period, the at least one second time point, and one time point after the at least one second time point, and a threshold RF exposure allocated for the designated period. The at least one operation may comprise identifying whether to change the transmission antenna from the first antenna to the second antenna based on whether the maximum value of the first transmission power and the maximum value of the second transmission power meet a condition set for changing the antenna.

According to an embodiment, the at least one operation may further comprise identifying whether a difference between the maximum value of the first transmission power and the maximum value of the second transmission power exceeds a first threshold as whether to meet the condition set for changing the transmission antenna.

According to an embodiment, the first threshold may be set based on the first antenna and/or the second antenna.

According to an embodiment, the at least one operation may further comprise identifying a first reception strength corresponding to the first antenna and a second reception strength corresponding to the second antenna. The at least one operation may further comprise identifying whether a sum of a first difference between the maximum value of the first transmission power and the maximum value of the second transmission power and a second difference between the first reception strength and the second reception strength exceeds a second threshold as whether to meet the condition set for changing the antenna.

According to an embodiment, the at least one operation may further comprise identifying whether to change the antenna from the second antenna to the first antenna based on whether a difference between a first reception strength corresponding to the first antenna and a second reception strength corresponding to the second antenna meets another condition set for changing the transmission antenna after changing the transmission antenna from the first antenna to the second antenna based on the maximum value of the first transmission power and the maximum value of the second transmission power meeting the condition for changing the antenna.

According to an embodiment, identifying whether to change the antenna from the second antenna to the first antenna based on whether the difference between the first reception strength and the second reception strength meets the other condition set for changing the transmission antenna may be performed during another designated period after the transmission antenna is changed from the first antenna to the second antenna.

According to an embodiment, identifying whether to change the transmission antenna from the first antenna to the second antenna based on whether the maximum value of the first transmission power and the maximum value of the second transmission power meet the condition set for changing the transmission antenna may identify whether to change the transmission antenna from the first antenna to the second antenna based on whether the maximum value of the first transmission power and the maximum value of the second transmission power meet the condition set for changing the transmission antenna, based on the first antenna being included in at least one designated antenna.

According to an embodiment, identifying whether to change the transmission antenna from the first antenna to the second antenna based on whether the maximum value of the first transmission power and the maximum value of the second transmission power meet the condition set for changing the transmission antenna may identify whether to change the transmission antenna from the first antenna to the second antenna based on whether the maximum value of the first transmission power and the maximum value of the second transmission power meet the condition set for changing the transmission antenna, based on an operating band corresponding to the first antenna being included in at least one designated operating band.

According to an embodiment, identifying whether to change the transmission antenna from the first antenna to the second antenna based on whether the maximum value of the first transmission power and the maximum value of the second transmission power meet the condition set for changing the transmission antenna may identify whether to change the transmission antenna from the first antenna to the second antenna based on whether the maximum value of the first transmission power and the maximum value of the second transmission power meet the condition set for changing the transmission antenna, based on receiving a signal indicating additional event detection from an application processor of the electronic device 101.

According to an embodiment, identifying the maximum value of the first transmission power corresponding to the first antenna corresponding to the one time point after the at least one first time point based on the first RF exposure, the second RF exposure, the third RF exposure, and the threshold RF exposure allocated for the designated period may identify the maximum value of the first transmission power based on a first remaining SAR identified by subtracting a sum of the first RF exposure, the second RF exposure, and the third RF exposure from the threshold RF exposure. Identifying the maximum value of the second transmission power corresponding to the second antenna corresponding to the one time point after the at least one second time point based on the fourth RF exposure, the fifth RF exposure, the sixth RF exposure, and the threshold RF exposure allocated for the designated period may identify the maximum value of the second transmission power based on a second remaining SAR identified by subtracting a sum of the fourth RF exposure, the fifth RF exposure, and the sixth RF exposure from the threshold RF exposure.

According to an embodiment, an electronic device 101 may comprise memory 130 storing at least one instruction and a processor 501 connected to the memory. The at least one instruction may, when executed by the processor, enable the electronic device 101 to perform at least one operation. The at least one operation may comprise identifying a maximum value of first transmission power corresponding to a first antenna set as a transmission antenna of the electronic device 101, corresponding to one time point after at least one first time point, based on first RF exposure corresponding to at least one first past time point of a designated period set for the first antenna, second RF exposure corresponding to the at least one first time point after the at least one past time point, third RF exposure corresponding to at least one first future time point except for the at least one first past time point of the designated period, the at least one first time point, and one time point after the at least one first time point, and a threshold RF exposure allocated for the designated period. The at least one operation may comprise identifying a maximum value of second transmission power corresponding to a second antenna different from the first antenna of the electronic device 101, corresponding to one time point after at least one second time point, based on fourth RF exposure corresponding to at least one second past time point of a designated period set for the second antenna, fifth RF exposure corresponding to the at least one second time point after the at least one past time point, sixth RF exposure corresponding to at least one second future time point except for the at least one second past time point of the designated period, the at least one second time point, and one time point after the at least one second time point, and a threshold RF exposure allocated for the designated period. The at least one operation may comprise identifying whether to change the transmission antenna from the first antenna to the second antenna based on whether the maximum value of the first transmission power and the maximum value of the second transmission power meet a condition set for changing the antenna.

According to an embodiment, the maximum value of the first transmission power may include a maximum value of transmission power supported by the electronic device101, target power, transmission power required by a network, and/or a maximum transmission power level associated with the first antenna, and The maximum value of the second transmission power may include a maximum value of transmission power supported by the electronic device 101, target power, transmission power required by the network, and/or a maximum transmission power level associated with the second antenna.

According to an embodiment, an electronic device 101 may comprise memory storing at least one instruction and a processor connected to the memory. The at least one instruction may, when executed by the processor, enable the electronic device 101 to perform at least one operation. The at least one operation may comprise identifying a maximum value of first transmission power corresponding to a first antenna set as a transmission antenna of the electronic device 101, corresponding to one time point after at least one first time point, based on first RF exposure corresponding to at least one first past time point of a designated period set for the first antenna, second RF exposure corresponding to the at least one first time point after the at least one past time point, third RF exposure corresponding to at least one first future time point except for the at least one first past time point of the designated period, the at least one first time point, and one time point after the at least one first time point, and a threshold RF exposure allocated for the designated period. The at least one operation may comprise identifying a maximum value of second transmission power corresponding to a second antenna different from the first antenna of the electronic device 101, corresponding to one time point after at least one second time point, based on fourth RF exposure corresponding to at least one second past time point of a designated period set for the second antenna, fifth RF exposure corresponding to the at least one second time point after the at least one past time point, sixth RF exposure corresponding to at least one second future time point except for the at least one second past time point of the designated period, the at least one second time point, and one time point after the at least one second time point, and a threshold RF exposure allocated for the designated period. The at least one operation may comprise identifying whether to change the transmission antenna from the first antenna to the second antenna based on whether the maximum value of the first transmission power and the maximum value of the second transmission power meet a condition set for changing the antenna.

According to an embodiment, the at least one operation may further comprise identifying whether a difference between the maximum value of the first transmission power and the maximum value of the second transmission power exceeds a first threshold as whether to meet the condition set for changing the transmission antenna.

According to an embodiment, the first threshold may be set based on the first antenna and/or the second antenna.

According to an embodiment, the at least one operation may further comprise identifying a first reception strength corresponding to the first antenna and a second reception strength corresponding to the second antenna. The at least one operation may further comprise identifying whether a sum of a first difference between the maximum value of the first transmission power and the maximum value of the second transmission power and a second difference between the first reception strength and the second reception strength exceeds a second threshold as whether to meet the condition set for changing the antenna.

According to an embodiment, the at least one operation may further comprise identifying whether to change the antenna from the second antenna to the first antenna based on whether a difference between a first reception strength corresponding to the first antenna and a second reception strength corresponding to the second antenna meets another condition set for changing the transmission antenna after changing the transmission antenna from the first antenna to the second antenna based on the maximum value of the first transmission power and the maximum value of the second transmission power meeting the condition for changing the antenna.

According to an embodiment, identifying whether to change the antenna from the second antenna to the first antenna based on whether the difference between the first reception strength and the second reception strength meets the other condition set for changing the transmission antenna may be performed during another designated period after the transmission antenna is changed from the first antenna to the second antenna.

According to an embodiment, identifying whether to change the transmission antenna from the first antenna to the second antenna based on whether the maximum value of the first transmission power and the maximum value of the second transmission power meet the condition set for changing the transmission antenna may identify whether to change the transmission antenna from the first antenna to the second antenna based on whether the maximum value of the first transmission power and the maximum value of the second transmission power meet the condition set for changing the transmission antenna, based on the first antenna being included in at least one designated antenna.

According to an embodiment, identifying whether to change the transmission antenna from the first antenna to the second antenna based on whether the maximum value of the first transmission power and the maximum value of the second transmission power meet the condition set for changing the transmission antenna may identify whether to change the transmission antenna from the first antenna to the second antenna based on whether the maximum value of the first transmission power and the maximum value of the second transmission power meet the condition set for changing the transmission antenna, based on an operating band corresponding to the first antenna being included in at least one designated operating band.

According to an embodiment, identifying whether to change the transmission antenna from the first antenna to the second antenna based on whether the maximum value of the first transmission power and the maximum value of the second transmission power meet the condition set for changing the transmission antenna may identify whether to change the transmission antenna from the first antenna to the second antenna based on whether the maximum value of the first transmission power and the maximum value of the second transmission power meet the condition set for changing the transmission antenna, based on receiving a signal indicating additional event detection from an application processor of the electronic device 101.

According to an embodiment, identifying the maximum value of the first transmission power corresponding to the first antenna corresponding to the one time point after the at least one first time point based on the first RF exposure, the second RF exposure, the third RF exposure, and the threshold RF exposure allocated for the designated period may identify the maximum value of the first transmission power based on a first remaining SAR identified by subtracting a sum of the first RF exposure, the second RF exposure, and the third RF exposure from the threshold RF exposure. Identifying the maximum value of the second transmission power corresponding to the second antenna corresponding to the one time point after the at least one second time point based on the fourth RF exposure, the fifth RF exposure, the sixth RF exposure, and the threshold RF exposure allocated for the designated period may identify the maximum value of the second transmission power based on a second remaining SAR identified by subtracting a sum of the fourth RF exposure, the fifth RF exposure, and the sixth RF exposure from the threshold RF exposure.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101) comprising:

    a plurality of antennas comprising a first antenna (521) and a second antenna (522);
    at least one processor (120; 212, 214; 260; 501); and

memory storing instructions, wherein the instructions, when executed by the at least one processor (120; 212, 214; 260; 501), cause the electronic device (101) to:

while the electronic device (101) performs communication using the first antenna (521) of the electronic device (101) based on the first antenna (521) being set as a transmission antenna, identify that a first condition for changing the transmission antenna is satisfied, the first condition being based on reception strength difference between a first reception strength associated with the first antenna (521) and a second reception strength associated with the second antenna (522) and/or a maximum transmission power value difference between a maximum value of first transmission power associated with the first antenna (521) and a maximum value of second transmission power associated with the second antenna (522);

based on satisfaction of the first condition, identify whether a second condition is satisfied, the second condition being that a period during which back off is not performed on the maximum value of transmission power associated with the second antenna (522) exceeds a threshold period; and

based on satisfaction of the second condition, change the transmission antenna from the first antenna (521) to the second antenna (522).

2. The electronic device (101) of claim 1, wherein the instructions, when executed by the at least one processor (120; 212, 214; 260; 501), cause the electronic device (101) to, based on the second condition being not satisfied, maintain the transmission antenna as the first antenna (521).

3. The electronic device (101) of claim 1, wherein the instructions, when executed by the at least one processor (120; 212, 214; 260; 501), cause the electronic device (101) to, based on the second condition being not satisfied, change the transmission antenna from the first antenna (521) to the second antenna (522) based on a modulation/demodulation scheme of the electronic device (101) being a predefined modulation/demodulation scheme, or maintain the transmission antenna as the first antenna (521) based on the modulation/demodulation scheme of the electronic device (101) being not the predefined modulation/demodulation scheme.

4. The electronic device (101) of claim 1, wherein the instructions, when executed by the at least one processor (120; 212, 214; 260; 501), cause the electronic device (101) to, as at least part of changing the transmission antenna from the first antenna (521) to the second antenna (522) based on satisfaction of the second condition, based on identifying the satisfaction of the second condition and identifying that a modulation/demodulation scheme of the electronic device (101) is a predefined modulation/demodulation scheme, change the transmission antenna from the first antenna (521) to the second antenna (522).

5. The electronic device (101) of claim 1, wherein the instructions, when executed by the at least one processor (120; 212, 214; 260; 501), cause the electronic device (101) to, based on the second condition being not satisfied, change the transmission antenna from the first antenna (521) to the second antenna (522) based on the reception strength difference exceeding a difference threshold, or maintain the transmission antenna as the first antenna (521) based on the reception strength difference not exceeding the difference threshold.

6. The electronic device (101) of claim 1, wherein the instructions, when executed by the at least one processor (120; 212, 214; 260; 501), cause the electronic device (101) to, based on identifying the satisfaction of the second condition and identifying that the reception strength difference exceeds a difference threshold, change the transmission antenna from the first antenna (521) to the second antenna (522).

7. The electronic device (101) of claim 1, wherein the instructions, when executed by the at least one processor (120; 212, 214; 260; 501), cause the electronic device (101) to, based on the second condition being not satisfied, change the transmission antenna from the first antenna (521) to the second antenna (522) based on a back off size corresponding to the second antenna (522) being less than or equal to a threshold back off size, or maintain the transmission antenna as the first antenna (521) based on the back off size corresponding to the second antenna (522) not being less than or equal to the threshold back off size.

8. The electronic device (101) of claim 1, wherein the instructions, when executed by the at least one processor (120; 212, 214; 260; 501), cause the electronic device (101) to, based on identifying the satisfaction of the second condition and identifying that a back off size corresponding to the second antenna (522) is less than or equal to a threshold back off size, change the transmission antenna from the first antenna (521) to the second antenna (522).

9. The electronic device (101) of any one of claims 1 to 8, wherein the first condition is that a sum of the reception strength difference and the maximum transmission power value difference exceeds a threshold size.

10. The electronic device (101) of any one of claims 1 to 8, wherein the first condition is that the maximum transmission power value difference exceeds a threshold size.

11. A storage medium storing at least one computer-readable instruction, wherein the at least one instruction, when executed by at least one processor (120; 212,214; 260; 501) of an electronic device (101), causes the electronic device (101) to:

based on a first antenna (521) of the electronic device (101) being set as a transmission antenna, while the electronic device (101) performs communication using the first antenna (521) of the electronic device (101), identify that a first condition for changing the transmission antenna is satisfied, based on a reception strength difference between a first reception strength associated with the first antenna (521) and a second reception strength associated with a second antenna (522) of the electronic device (101), and/or a transmission power maximum value difference between a maximum value of a first transmission power associated with the first antenna (521) and a maximum value of a second transmission power associated with the second antenna (522); based on satisfaction of the first condition, identify whether a second condition is satisfied, the second condition being that a period during which back-off is not performed on the maximum value of the transmission power associated with the second antenna (522) exceeds a threshold period; and based on the second condition being satisfied, change the transmission antenna from the first antenna (521) to the second antenna (522).

12. The storage medium of claim 11, wherein the instructions, when executed by the at least one processor (120; 212,214; 260; 501), cause the electronic device (101) to, based on the second condition not being satisfied, maintain the transmission antenna as the first antenna (521).

13. The storage medium of claim 11, wherein the instructions, when executed by the at least one processor (120; 212,214; 260; 501), cause the electronic device (101) to, based on the second condition not being satisfied, change the transmission antenna from the first antenna (521) to the second antenna (522) based on a modulation/demodulation scheme of the electronic device (101) being a designated modulation/demodulation scheme, or maintain the transmission antenna as the first antenna (521) based on the modulation/demodulation scheme of the electronic device (101) not being the designated modulation/demodulation scheme.

14. The storage medium of claim 11, wherein the instructions, when executed by the at least one processor (120; 212,214; 260; 501), cause the electronic device (101), as at least part of changing the transmission antenna from the first antenna (521) to the second antenna (522) based on the second condition being satisfied, to change the transmission antenna from the first antenna (521) to the second antenna (522) based on identifying that the second condition is satisfied and identifying that a modulation/demodulation scheme of the electronic device (101) is a designated modulation/demodulation scheme.

15. The storage medium of claim 11, wherein the instructions, when executed by the at least one processor (120; 212,214; 260; 501), cause the electronic device (101), based on the second condition not being satisfied, to, change the transmission antenna from the first antenna (521) to the second antenna (522) based on the reception strength difference exceeding a difference threshold, or maintain the transmission antenna as the first antenna (521) based on the reception strength difference not exceeding the difference threshold.

FIG. 1

EP 4 738 721 A1

FIG.2A

FIG.2B

START

INVOKE MULTIPLE TABLES FOR
TRANSMISSION POWER
CORRESPONDING TO MULTIPLE TIMES ~ 301

IDENTIFY PAST CUMULATIVE SAR VALUE
AND PREDICTED SAR VALUE AT
CURRENT TIME AND FUTURE TIME,
FOR MULTIPLE TABLES ~ 303

305
IS THERE TABLE
IN WHICH SUM OF CUMULATIVE
SAR VALUE AND PREDICTED SAR VALUE
EXCEEDS THRESHOLD CUMULATIVE
VALUE?

NO

309
TRANSMIT
COMMUNICATION SIGNAL AT
SET TRANSMISSION POWER

YES

BACK OFF TRANSMISSION POWER OF AT
LEAST PART OF COMMUNICATION SIGNAL ~ 307

END

FIG. 3A

FIG. 3B

EP 4 738 721 A1

Power dBm

FIG. 4A

Power dBm

~452

FIG. 4B

EP 4 738 721 A1

40

Time

401 402 403 404 405 406 407 408 409 410 411 412 413 414 415 416 417 418 419 420 421 422 423 424 425 426 427 428 429 430 431 432 433 434 435 436 437 438 439 440 441 442 443 444 445 446 447 448 449

FIG. 4C

FIG. 4D

FIG. 4E

FIG. 5A

524    523

562

561

521    522

# FIG. 5B

START

IDENTIFY MAXIMUM VALUE OF FIRST TRANSMISSION
POWER AT A TIME AFTER DESIGNATED TIME
FROM CURRENT TIME POINT CORRESPONDING TO
FIRST ANTENNA SET AS TRANSMISSION ANTENNA ～601

IDENTIFY MAXIMUM VALUE OF SECOND
TRANSMISSION POWER AT A TIME AFTER
DESIGNATED TIME FROM CURRENT TIME POINT
CORRESPONDING TO SECOND ANTENNA
NOT SET AS TRANSMISSION ANTENNA ～603

605
MAXIMUM VALUE
OF FIRST TRANSMISSION POWER
AND MAXIMUM VALUE OF SECOND TRANSMISSION
POWER MEET CONDITION SET FOR CHANGING
TRANSMISSION ANTENNA?

NO

YES 609

CHANGE TRANSMISSION ANTENNA
TO SECOND ANTENNA

607

MAINTAIN FIRST ANTENNA AS
TRANSMISSION ANTENNA

END

FIG. 6A

FIG. 6B

dBm

Plimit 20dBm, SAR Max Power 23dBm, Lower Side

SAR Max Power

Backoff Power

1sec 2sec 3sec 4sec 5sec 6sec 7sec 8sec 9sec 10sec 11sec Time

dBm

Plimit 20dBm, SAR Max Power 23dBm, Upper Side

SAR Max Power

Backoff Power

1sec 2sec 3sec 4sec 5sec 6sec 7sec 8sec 9sec 10sec 11sec Time

# FIG. 6C

FIG. 6D

START

IDENTIFY MAXIMUM VALUE OF FIRST TRANSMISSION POWER AT A TIME AFTER DESIGNATED TIME FROM CURRENT TIME POINT CORRESPONDING TO FIRST ANTENNA SET AS TRANSMISSION ANTENNA — 701

IDENTIFY MAXIMUM VALUE OF SECOND TRANSMISSION POWER AT A TIME AFTER DESIGNATED TIME FROM CURRENT TIME POINT CORRESPONDING TO SECOND ANTENNA NOT SET AS TRANSMISSION ANTENNA — 703

IDENTIFY FIRST RECEPTION STRENGTH CORRESPONDING TO FIRST ANTENNA AND SECOND RECEPTION STRENGTH CORRESPONDING TO SECOND ANTENNA — 705

MAXIMUM VALUE OF FIRST TRANSMISSION POWER, MAXIMUM VALUE OF SECOND TRANSMISSION POWER, FIRST RECEPTION STRENGTH, AND SECOND RECEPTION STRENGTH MEET CONDITION SET FOR CHANGING TRANSMISSION ANTENNA? 707

NO

YES

MAINTAIN FIRST ANTENNA AS TRANSMISSION ANTENNA 709

CHANGE TRANSMISSION ANTENNA TO SECOND ANTENNA 711

END

FIG. 7

START

IDENTIFY MAXIMUM VALUE OF FIRST
TRANSMISSION POWER, MAXIMUM VALUE OF
SECOND TRANSMISSION POWER,
FIRST RECEPTION STRENGTH,
AND SECOND RECEPTION STRENGTH — 801

MAXIMUM VALUES
OF TRANSMISSION POWER AND
RECEPTION STRENGTHS MEET FIRST
TRANSMISSION ANTENNA
CHANGE CONDITION? — 803

NO → MAINTAIN
TRANSMISSION ANTENNA — 805

YES

CHANGE TRANSMISSION ANTENNA — 807

DESIGNATED PERIOD ELAPSES? — 809

YES

NO

IDENTIFY FIRST RECEPTION STRENGTH
AND SECOND RECEPTION STRENGTH — 811

RECEPTION STRENGTHS
MEET SECOND TRANSMISSION ANTENNA
CHANGE CONDITION? — 813

NO → MAINTAIN
TRANSMISSION ANTENNA — 817

YES

CHANGE TRANSMISSION ANTENNA — 815

END

FIG. 8A

START

831
RECEPTION STRENGTH-BASED CHANGE MODE? —— YES

NO

833
MAXIMUM VALUES OF TRANSMISSION POWER AND RECEPTION STRENGTHS MEET FIRST TRANSMISSION ANTENNA CHANGE CONDITION?

NO

835
RECEPTION STRENGTHS MEET SECOND TRANSMISSION ANTENNA CHANGE CONDITION?

YES ←—— YES

NO

CHANGE TRANSMISSION ANTENNA —— 837

839
TRANSMISSION ANTENNA CHANGE IS PERFORMED BY MAXIMUM VALUES OF TRANSMISSION POWER? —— NO

YES

APPLY RECEPTION STRENGTH-BASED CHANGE MODE FOR N SECONDS —— 841

END

FIG. 8B

START

IDENTIFY MAXIMUM VALUE OF FIRST TRANSMISSION POWER AT A TIME AFTER DESIGNATED TIME FROM CURRENT TIME POINT CORRESPONDING TO FIRST ANTENNA SET AS TRANSMISSION ANTENNA — 901

IDENTIFY MAXIMUM VALUE OF SECOND TRANSMISSION POWER AT A TIME AFTER DESIGNATED TIME FROM CURRENT TIME POINT CORRESPONDING TO SECOND ANTENNA NOT SET AS TRANSMISSION ANTENNA — 903

IDENTIFY TRANSMISSION ANTENNA CHANGE CONDITION BASED ON FIRST ANTENNA AND/OR SECOND ANTENNA — 905

MAXIMUM VALUE OF FIRST TRANSMISSION POWER AND MAXIMUM VALUE OF SECOND TRANSMISSION POWER MEET IDENTIFIED TRANSMISSION ANTENNA CHANGE CONDITION? — 907

YES

NO

MAINTAIN FIRST ANTENNA AS TRANSMISSION ANTENNA — 909

CHANGE TRANSMISSION ANTENNA TO SECOND ANTENNA — 911

END

FIG. 9A

FIG. 9B

START

TRANSMISSION ANTENNA
CHANGE CONDITION? — 1001 — SECOND CHANGE
CONDITION → ( 1 )

FIRST CHANGE CONDITION

IDENTIFY MAXIMUM VALUE OF FIRST TRANSMISSION
POWER AT A TIME AFTER DESIGNATED TIME FROM
CURRENT TIME POINT, AND MAXIMUM VALUE OF
SECOND TRANSMISSION POWER AT A TIME
DESIGNATED TIME FROM CURRENT TIME POINT — 1003

MAXIMUM VALUE
OF FIRST TRANSMISSION POWER
AND MAXIMUM VALUE OF SECOND TRANSMISSION
POWER MEET FIRST CHANGE
CONDITION? — 1005

YES

CHANGE TRANSMISSION
ANTENNA — 1007

NO

MAINTAIN TRANSMISSION ANTENNA — 1009

( 2 )

END

FIG. 10A

```
        ( 1 )
          │
          ▼
┌─────────────────────────────┐
│    IDENTIFY MAXIMUM VALUE OF │
│ THIRD TRANSMISSION POWER AT  │ ⌐ 1011
│ CURRENT TIME POINT, AND      │
│ MAXIMUM VALUE OF FOURTH      │
│ TRANSMISSION POWER AT        │
│ CURRENT TIME POINT           │
└─────────────────────────────┘
```

IDENTIFY MAXIMUM VALUE OF THIRD TRANSMISSION POWER AT CURRENT TIME POINT, AND MAXIMUM VALUE OF FOURTH TRANSMISSION POWER AT CURRENT TIME POINT — 1011

1013 — MAXIMUM VALUE OF THIRD TRANSMISSION POWER AND MAXIMUM VALUE OF FOURTH TRANSMISSION POWER MEET SECOND CHANGE CONDITION?

NO

YES — 1015 CHANGE TRANSMISSION ANTENNA

1017 — MAINTAIN TRANSMISSION ANTENNA

( 2 )

FIG. 10B

FIG. 11

START

SET SHARED ANTENNA AS
TRANSMISSION ANTENNA — 1201

NO

1203
TRANSMISSION
ANTENNA CHANGE CONDITION
CORRESPONDING TO SHARED
ANTENNA IS MET?

YES

CHANGE TRANSMISSION ANTENNA FROM
SHARED ANTENNA TO ANTENNA — 1205
OTHER THAN SHARED ANTENNA

END

# FIG. 12A

START

SET SHARED ANTENNA AS
TRANSMISSION ANTENNA — 1211

TRANSMISSION
ANTENNA CHANGE CONDITION
CORRESPONDING TO SHARED
ANTENNA IS MET? — 1213

NO

YES

CHANGE TRANSMISSION ANTENNA FROM
SHARED ANTENNA TO ANTENNA
OTHER THAN SHARED ANTENNA — 1215

ADJUST TRANSMISSION ANTENNA
CHANGE CONDITION — 1217

END

FIG. 12B

START

→

IS TRANSMISSION
ANTENNA CHANGE CONDITION
BASED ON RECEPTION STRENGTH AND/OR
MAXIMUM VALUE OF TRANSMISSION
POWER SATISFIED?  — 1301

NO →

YES
↓

DOES
PERIOD DURING WHICH
FIRST VALUE OF MAXIMUM VALUE
OF TRANSMISSION POWER AT SECOND
TRANSMISSION ANTENNA MAY BE
MAINTAINED EXCEED
THRESHOLD PERIOD?  — 1303

NO →

YES
↓

CHANGE TRANSMISSION ANTENNA
TO SECOND ANTENNA  — 1305

MAINTAIN TRANSMISSION
ANTENNA AS FIRST ANTENNA  — 1307

END

FIG. 13

FIG. 14

FIG. 15

FIG. 16

FIG. 17

FIG. 18

## INTERNATIONAL SEARCH REPORT

International application No.

**PCT/KR2024/008239**

### A. CLASSIFICATION OF SUBJECT MATTER

**H04B 7/06**(2006.01)i; **H04W 52/36**(2009.01)i; **H04B 17/318**(2015.01)i; **H04B 1/3827**(2015.01)i; **H04L 27/18**(2006.01)i; **H04W 52/28**(2009.01)i

According to International Patent Classification (IPC) or to both national classification and IPC

### B. FIELDS SEARCHED

Minimum documentation searched (classification system followed by classification symbols)

H04B 7/06(2006.01); G01K 1/02(2006.01); H04B 1/3827(2015.01); H04B 7/08(2006.01); H04W 52/22(2009.01); H04W 52/36(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 송신 안테나(transmit antenna), 변경(switch), 수신 세기(received intensity), 송신 파워(transmit power), 최댓값(maximum value), 백 오프(back off), 임계 기간(threshold period)

### C. DOCUMENTS CONSIDERED TO BE RELEVANT

| Category* | Citation of document, with indication, where appropriate, of the relevant passages | Relevant to claim No. |
|---|---|---|
| A | WO 2023-014379 A1 (GOOGLE LLC) 09 February 2023 (2023-02-09)<br>See paragraphs [0012]-[0070]; and figures 1-12. | 1-15 |
| A | CN 114826362 A (OPPO GUANGDONG MOBILE TELECOMMUNICATIONS CO., LTD.) 29 July 2022 (2022-07-29)<br>See claims 1-7. | 1-15 |
| A | KR 10-2022-0168621 A (SAMSUNG ELECTRONICS CO., LTD.) 26 December 2022 (2022-12-26)<br>See paragraphs [0013]-[0112]; and figures 1-10. | 1-15 |
| A | US 2023-0139016 A1 (QUALCOMM INCORPORATED) 04 May 2023 (2023-05-04)<br>See paragraphs [0100]-[0203]; and figures 7-16. | 1-15 |
| A | US 2023-0098822 A1 (INTEL CORPORATION) 30 March 2023 (2023-03-30)<br>See paragraphs [0036]-[0059]; and figures 3-12. | 1-15 |

☐ Further documents are listed in the continuation of Box C.　　☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
|---|---|
| **20 September 2024** | **20 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/008239**

| Patent document cited in search report | | | Publication date (day/month/year) | Patent family member(s) | | | Publication date (day/month/year) |
|---|---|---|---|---|---|---|---|
| WO | 2023-014379 | A1 | 09 February 2023 | EP | 4352883 | A1 | 17 April 2024 |
| CN | 114826362 | A | 29 July 2022 | | None | | |
| KR | 10-2022-0168621 | A | 26 December 2022 | CN | 115483955 | A | 16 December 2022 |
| | | | | US | 2022-0407551 | A1 | 22 December 2022 |
| US | 2023-0139016 | A1 | 04 May 2023 | CN | 118140539 | A | 04 June 2024 |
| | | | | KR | 10-2024-0088979 | A | 20 June 2024 |
| | | | | WO | 2023-081678 | A1 | 11 May 2023 |
| | | | | WO | 2023-235796 | A1 | 07 December 2023 |
| US | 2023-0098822 | A1 | 30 March 2023 | EP | 4156539 | A1 | 29 March 2023 |

Form PCT/ISA/210 (patent family annex) (July 2022)